# EUROPÄISCHE PATENTSCHRIFT

(11) **EP 3 371 850 B1**
(45) Veröffentlichungstag und Bekanntmachung des Hinweises auf die Patenterteilung: **28.07.2021**
(21) Anmeldenummer: 16791041.3
(22) Anmeldetag: 07.11.2016
(51) Int. Cl.: H01Q 1/06, F03D 80/10

(54) **FLUGBEFEUERUNG EINER WINDENERGIEANLAGE**
AIRCRAFT BEACON OF A WIND TURBINE
BALISAGE AÉRIEN D'UNE ÉOLIENNE

(30) Priorität: 06.11.2015 DE 102015119057
(43) Veröffentlichungstag der Anmeldung: 12.09.2018
(73) Patentinhaber: Wobben Properties GmbH, 26607 Aurich (DE)
(72) Erfinder: HARMS, Stephan, 26529 Upgant-Schott (DE); STÜRENBURG, Erich, 26605 Aurich (DE); REITER, Daniel, 26632 Ihlow (DE); KÖCKLAR, Matthias, 26524 Hage (DE)
(74) Vertreter: Eisenführ Speiser
(86) Internationale Anmeldenummer: PCT/EP2016/076796
(87) Internationale Veröffentlichungsnummer: WO 2017/077102

(56) Entgegenhaltungen:
- EP-A1- 2 053 239
- EP-A1- 2 320 126
- US-A1- 2011 194 283
- US-A1- 2011 241 926
- US-A1- 2014 377 060
- Www Vestas Com ET AL: "Vestas Wind Systems A/S Alsvej 21 DK-8900 Randers General Specification General Specification for V90 - 3.0 MW 60 Hz Variable Speed Turbine Type: MAN Page: 2 of 27", , 1 October 2006 (2006-10-01), XP055675143, Retrieved from the Internet: URL:https://report.nat.gov.tw/ReportFront/ PageSystem/reportFileDownload/C09503816/00 2 [retrieved on 2020-03-10]

## Beschreibung

Die vorliegende Erfindung betrifft eine Flugbefeuerungseinrichtung für eine Windenergieanlage und die vorliegende Erfindung betrifft ein Verfahren zum Betreiben einer Windenergieanlage sowie eine Windenergieanlage mit einer Flugbefeuerungseinrichtung.

Flugbefeuerungseinrichtungen sind bekannt und werden zunehmend auch auf Windenergieanlagen benötigt, um Windenergieanlagen für den Flugverkehr besser sichtbar zu machen. Auf der Gondel einer Windenergieanlage sind wenigstens an zwei Stellen Befeuerungsleuchten angeordnet. Bei Windenergieanlagen besteht das Problem, dass Rotorblätter die Flugbefeuerung verdecken können. Dadurch, dass Befeuerungsleuchten an wenigstens zwei Stellen auf der Gondel beabstandet zueinander angeordnet sind, wird erreicht, dass wenigstens eine nicht durch ein Rotorblatt verdeckt ist. Zusätzlich können auch Befeuerungsleuchten am Turm, also an der Turmwandung angeordnet sein. Das kann besonders bei sehr hohen Windenergieanlagen vorkommen.

Ein Problem stellt sich hierbei besonders für die Hersteller von Windenergieanlagen, dass für solche Flugbefeuerungseinrichtungen je nach Region und besonders je nach Staat, in dem die betreffende Windenergieanlage aufgestellt wird, sehr unterschiedliche Vorschriften und damit technische Anforderungen an die Flugbefeuerungseinrichtung gestellt werden. Unter diesen unterschiedlichen Anforderungen fallen Anforderungen an Intensität, auch abhängig von der Tageszeit, als auch Anforderungen an die Abstrahlrichtung, besonders an den auf die vertikale Richtung bezogenen Abstrahlwinkelbereich. Dabei sind solche Anforderungen sowohl hinsichtlich Abstrahlwinkelbereich als auch Intensität häufig kombiniert und als Charakteristika mit Toleranzbereichen vorgegeben.

Wird nun eine Windenergieanlage konzipiert, so muss die vorgesehene Flugbefeuerungseinrichtung an die Vorschriften und Gegebenheiten des geplanten Aufstellungsortes angepasst werden. So kann es auch vorkommen, dass mehrere Windenergieanlagen sich nur in der Flugbefeuerungseinrichtung unterscheiden.

Sofern der Windenergieanlagenhersteller die Flugbefeuerungseinrichtungen nicht selber herstellt, gibt dieser die entsprechenden Anforderungen an die jeweilige Flugbefeuerungseinrichtung an den Hersteller solcher Flugbefeuerungseinrichtungen weiter. Entsprechend kann dann eine individuelle Flugbefeuerungseinrichtung hergestellt werden. Gegebenenfalls kommt in Betracht, dass es für das betreffende Land und die entsprechenden Rahmenbedingungen des Aufstellungsortes oder der Windenergieanlage, wie beispielweise die Höhe der Windenergieanlage und ihre Entfernung zu einem Flughafen, entsprechende Flugbefeuerungseinrichtungen bereits gibt. Allerdings ist die Variationsvielfalt hoch und es ist auch zu berücksichtigen, dass sich Vorschriften und Bedingungen ändern, was ebenfalls zu neuen Anforderungen an die Flugbefeuerungseinrichtung führt und entsprechend die Entwicklung einer neuen Flugbefeuerungseinrichtung notwendig machen könnte.

Es sind heutzutage schon Flugbefeuerungseinrichtungen bekannt und üblich geworden, die als Leuchtmittel viele Leuchtdioden verwenden. Dadurch kann sich die Veränderung einer solchen Flugbefeuerungseinrichtung vereinfachen, so dass auch das Vorhalten unterschiedlicher Flugbefeuerungseinrichtungen vereinfacht, zumindest auch weniger kostspielig sein kann.

Als weiteres Problem bei bekannten Flugbefeuerungseinrichtungen ist auch, dass die zusätzliche Verwendung von Befeuerungsleuchten am Turm und deren Koordination mit den Befeuerungsleuchten auf der Gondel solche Flugbefeuerungseinrichtungen komplexer werden lässt und damit auch die Variationsbreite steigt. Dabei kann eine solche Variationsbreite nicht nur die verschiedenen körperlichen Elemente einer solchen Flugbefeuerungseinrichtung betreffen, sondern auch die jeweils notwendige Ansteuerung. Dabei kann nicht nur problematisch sein, überhaupt die Ansteuerungsvielfaltje nach Anforderung zu berücksichtigen, sondern auch sicherzustellen, dass die Befeuerungsleuchten auch jeweils mit der für sie vorgesehenen Steuerung angesteuert werden.

Das Deutsche Patent- und Markenamt hat in der Prioritätsanmeldung zu vorliegender Anmeldung folgenden Stand der Technik recherchiert: DE 20 2009 018 539 U1 und EP 2 320 126 A1.

Aus der EP 2 053 239 A1 ist ein Verfahren zur Steuerung einer Windturbine bekannt, bei der in den Blattspitzen der Rotorblätter Signalfeuer angeordnet sind. Eine zentrale Steuereinheit steuert nachgeordnete Steuereinheiten so an, dass eine Signalleuchte immer dann angeht, wenn sich die Blattspitze, auf der die Signalleuchte angeordnet ist, in der höchsten Position befindet.Der vorliegenden Erfindung liegt somit die Aufgabe zugrunde, zumindest eines der oben genannten Probleme zu adressieren. Insbesondere soll eine Lösung vorgeschlagen werden, die im Hinblick auf eine hohe Variationsbreite von Flugbefeuerungseinrichtungen eine Lösung vorschlägt, die möglichst einfach ist und außerdem oder alternativ möglichst wenig fehleranfällig ist. Zumindest soll zu bisher Bekanntem eine Alternative vorgeschlagen werden.

Erfindungsgemäß wird eine Flugbefeuerungseinrichtung nach Anspruch 1 vorgeschlagen. Eine solche Flugbefeuerungseinrichtung ist für eine Windenergieanlage mit einer Gondel und einem diese Gondel tragenden Turm vorgesehen. Die Flugbefeuerungseinrichtung umfasst mehrere Befeuerungsleuchten. Besonders kann wenigstens eine Befeuerungsleuchte als Tagbefeuerung und eine Befeuerungsleuchte als Nachtbefeuerung vorgesehen sein, was vereinfachend auch als Tagfeuer bzw. Nachtfeuer bezeichnet wird. Insbesondere sind zwei Tagfeuer und zwei Nachtfeuer vorgesehen, die entsprechend auch zu unterschiedlichen Zeiten leuchten, nämlich die Tagbefeuerung bei entsprechend hellem Tageslicht und die Nachtbefeuerung im Grunde abends oder nachts nach Sonnenuntergang. Besonders sind diese Befeuerungsleuchten gruppenweise so zueinander beabstandet angeordnet, dass maximal eine Gruppe durch ein Rotorblatt der Windenergieanlage abgedeckt werden kann. Erfindungsgemäß sind jeweils mehrere Befeuerungsleuchten zu einem Befeuerungskörper verbunden. Außerdem sind zwei oder mehr Befeuerungskörper vorgesehen und die Befeuerungsleuchten wenigstens jeweils eines Befeuerungskörpers sind individuell ansteuerbar.

Außerdem ist eine Zentralsteuereinheit vorgesehen, um die Befeuerungsleuchten individuell anzusteuern. Die Zentralsteuereinheit ist somit zur Steuerung mehrerer, insbesondere aller Befeuerungsleuchten der Flugbefeuerungseinrichtung vorgesehen. Die Zentralsteuereinheit kann insoweit nicht nur eine zentrale Aufgabe haben, sondern auch deutlich zentral angeordnet sein.

Weiterhin ist ein Übertragungssystem vorgesehen, das ein Energieverteilsystem und ein Datenbussystem aufweist. Das Energieverteilsystem ist dabei zum individuellen Zuführen elektrischer Energie zu den Befeuerungsleuchten vorgesehen, um diese zu betreiben. Das Datenbussystem ist zum individuellen Ansteuern der Befeuerungsleuchten vorgesehen, wobei das Datenbussystem Steuerdaten zwischen der Zentralsteuereinheit und den Befeuerungsleuchten überträgt. Es wird somit ein Datenbussystem vorgeschlagen, das entsprechend einen Datenbus aufweist oder ein Datenbus ist. Ein Beispiel für einen Datenbus ist ein Feldbus, der sich besonders durch eine Robustheit gegenüber Umwelteinflüssen wie Temperaturschwankungen und elektromagnetischen Störungen auszeichnet.

Demnach wird den Befeuerungsleuchten sowohl Energie zugeführt, als auch Steuerungssignale zugeführt.

Über das Datenbussystem ist es nun möglich, von der Zentralsteuereinheit verschiedene Daten an die verschiedenen Befeuerungsleuchten auf einfache und flexible Art und Weise zu übertragen. Durch die Verwendung eines Datenbussystems mit entsprechenden Übertragungsprotokollen kann die Datenbereitstellung und Übertragung grundsätzlich unabhängig von der konkreten Befeuerungsleuchte erfolgen. Es kann ein gemeinsames und insoweit auch einheitliches Bussystem vorgesehen sein, das die unterschiedlichsten Steuerdaten übertragen kann. Ein solches Datenbussystem kann grundsätzlich unabhängig von den konkreten Gegebenheiten sein, die die betreffende Befeuerungseinrichtung erfüllen muss. Besonders kann das Datenbussystem nicht nur unabhängig von der jeweiligen Art der Abstrahlung sein, sondern auch unabhängig von der Anzahl der Befeuerungsleuchten, die gesteuert werden müssen. Lediglich können weitere Anschlussleitungen, sofern die Übertragung kabelgebunden erfolgt, bei entsprechend mehr Befeuerungsleuchten notwendig sein. Die grundsätzliche Aufbereitung der entsprechenden Steuerdaten zur Übertragung kann unverändert bleiben. Es ändern sich lediglich die Inhalte, einschließlich Inhalte des Signals, die zum Zuordnen der entsprechenden Daten notwendig sind.

Auch die entsprechende Befeuerungsleuchte kann jeweils einen einheitlichen Anschluss einschließlich Auswerteeinheit zum Empfangen und Auswerten der Steuerdaten aufweisen.

Insoweit wird ein generalisiertes, gleichwohl leistungsstarkes System geschaffen. Befeuerungsleuchten können bedarfsgerecht angesteuert werden.

Auch das Energieverteilsystem kann insoweit generalisiert werden.

Es können nun die Befeuerungsleuchten an die jeweiligen Voraussetzungen des vorgesehenen Aufstellungsortes angepasst werden. Insoweit dies Anzahl und Auswahl entsprechender Leuchten betrifft, also insbesondere ob zusätzlich zu Tag- und Nachtfeuern noch eine Sonderbefeuerung notwendig ist, einschließlich auch eine Infrarotbefeuerung und ob und wie viele Befeuerungsleuchten für den Turm vorgesehen sind, müssen entsprechende Befeuerungsleuchten zusammengestellt werden. Insoweit die Anforderungen aber über eine entsprechende Ansteuerung realisiert werden können, also im Vergleich zu anderen Anforderungen variiert werden können, ist eine Softwareanpassung ausreichend. Die geänderten Steuersignale sind entsprechend angepasst und können mittels des Datenbussystems zu den entsprechenden Befeuerungsleuchten übertragen werden. Die grundsätzliche Struktur des Datenbussystems einschließlich Übertragungsprotokoll bleibt hiervon unberührt. Aus Sicht des Datenbussystems ändern sich nur die Inhalte. Im Übrigen vereinfacht die Verwendung eines Datenbussystems auch die Implementierung und Durchführung der entsprechenden Steuerung der Flugbefeuerungseinrichtung mittels Computer, Prozessrechner oder anderen Datenverarbeitungssystemen.

Gemäß einer Ausführungsform wird vorgeschlagen, dass die Zentralsteuereinheit im Inneren der Windenergieanlage angeordnet ist, insbesondere in der Gondel. Hierdurch kann die Zentralsteuereinheit die Befeuerungsleuchten vom Inneren der Windenergieanlage aus zentral ansteuern. Besonders können mehrere auf der Anlage, insbesondere auf der Gondel verteilt angeordnete Befeuerungsleuchten in dieser Zentralsteuereinheit zentral zusammengeführt werden. Die Zentralsteuereinheit ist hierdurch vor Witterungseinflüssen geschützt und außerdem für Servicepersonal leichter erreichbar. Dadurch können auch auf einfache Art und Weise Anpassungen der Steuerung vorgenommen werden. Ebenso können gegebenenfalls Befeuerungsleuchten ergänzt oder wieder entfernt werden. Der Gesamtaufbau einer Flugbefeuerungseinrichtung wird dadurch erheblich erleichtert, weil die Befeuerungsleuchten lediglich an den entsprechenden Stellen auf oder an der Windenergieanlage angeordnet und befestigt werden müssen und ansonsten ein Anschluss, besonders leitungsgebunden, zentral an dieser Zentralsteuereinheit im Inneren vorgenommen werden kann.

Diese Umsetzung wird besonders durch die Verwendung des Datenbussystems vereinfacht. Gleichzeitig können auch unterschiedliche Flugbefeuerungseinrichtungen mit gleichen Zentralsteuereinheiten vorgesehen werden. Es kann hierbei ausreichen, dass etwaige Anpassungen für die Ansteuerung durch entsprechende Software oder entsprechende Parameteränderung in der Zentralsteuereinheit umgesetzt werden können.

So können besonders zwei Befeuerungskörper oben auf der Gondel der Windenergieanlage angeordnet und so beabstandet sein, dass bei der Drehung des Rotors der Windenergieanlage maximal einer der Befeuerungskörper durch ein Rotorblatt abgedeckt wird. Es können aber auch weitere Befeuerungskörper vorgesehen sein, wie beispielsweise am Turm.

Durch das individuelle Ansteuern der Befeuerungsleuchten können die Befeuerungsleuchten und damit auch die entsprechenden Befeuerungskörper jeweils an die aktuelle Situation angepasst werden. Unter einer solchen aktuellen Situation fällt zum Einen die Einbausituation, also beispielsweise ob der Befeuerungskörper oben auf der Gondel auf einer rechten Seite oder oben auf der Gondel auf einer linken Seite angeordnet ist. Dies kann sich beispielsweise auf eine Blickrichtung auf der Gondel in Richtung zum Rotor beziehen. Eine solche Einbausituation wird sich üblicherweise bei einer Windenergieanlage nicht ändern, ist gleichwohl zu berücksichtigen.

Bei dieser Einbausituation kann beispielsweise eine Berücksichtigung so aussehen, dass der Befeuerungskörper bzw. dessen Befeuerungsleuchten so angesteuert werden, dass sie je nach Position nur einen Bereich von 270 Grad ausleuchten. Der andere auf der Gondel entsprechend auf einer anderen Seite angeordnete Befeuerungskörper kann ebenfalls so angesteuert werden, dass er nur 270 Grad ausleuchtet. Zusammen leuchten diese beiden Befeuerungskörper dann rechnerisch einen Bereich von 540 Grad aus, nämlich einen Bereich von 360 Grad, von dem ein Bereich von 180 Grad, nämlich sinnvollerweise nach vorne, doppelt ausgeleuchtet wird. Somit wird der Bereich nach vorne, bei dem nämlich das Problem besteht, dass ein Befeuerungskörper durch ein Rotorblatt abgedeckt werden kann, doppelt ausgeleuchtet wird.

Somit ist für diese Situation auf einfache Art und Weise die Flugbefeuerungseinrichtung vorsehbar. Es können nämlich zwei gleiche Befeuerungskörper auf der Gondel der Windenergieanlage angeordnet werden, um bei dem oben genannten Beispiel zu bleiben, die lediglich durch die Zentralsteuerung entsprechend individuell angesteuert werden.

Darüber hinaus kann auch auf einfache Art und Weise die jeweilige Tageszeit bei der Ansteuerung berücksichtigt werden. Die Beleuchtungskörper als solche brauchen keinerlei Anpassung vorzunehmen und jegliche Berücksichtigung von Tageszeiten, beispielsweise unter weiterer Berücksichtigung von Jahreszeiten, kann durch die Zentralsteuereinheit umgesetzt werden.

Vorzugsweise wird vorgesehen, dass Befeuerungsleuchten jeweils eines Befeuerungskörpers individuell austauschbar sind. Dadurch kann erreicht werden, dass Befeuerungskörper auf einfache Art und Weise mit den jeweils nötigen Befeuerungsleuchten zusammengestellt werden können. Eine solche individuelle Austauschbarkeit kann auch bei durchzuführenden Reparaturen oder Wartungen vorteilhaft sein, wenn die betreffende Befeuerungsleuchte durch eine andere, baugleiche getauscht werden kann.

Besonders bevorzugt wird vorgesehen, dass Befeuerungsleuchten jeweils durch eine Befeuerungsleuchte eines anderen der zwei oder mehr Befeuerungskörper ersetzbar sind. Entsprechend wird vorgeschlagen, dass mehrere Befeuerungskörper der Flugbefeuerung baugleich sind, zumindest dass ihre Befeuerungsleuchten jeweils baugleich sind. Es muss nicht für alle Befeuerungskörper der Flugbefeuerung gelten, könnte aber insbesondere für zwei oben auf der Gondel anzuordnende Befeuerungskörper gelten. Beispielsweise können zwei Befeuerungskörper vorgesehen sein, die jeweils eine rote Befeuerungsleuchte für den Nachtbetrieb und jeweils eine weiße Befeuerungsleuchte für den Tagbetrieb aufweisen. So kann vorgesehen sein, dass hier die roten Befeuerungsleuchten untereinander ausgetauscht werden können und dass die weißen Befeuerungsleuchten untereinander ausgetauscht werden können. Besonders können diese austauschbaren Befeuerungsleuchten baugleich sein, in Betrieb aber je nach Ansteuerung unterschiedliche Sektoren ausleuchten. Dies kann durch eine jeweils individuelle Ansteuerung der Befeuerungsleuchten erreicht werden. Die Befeuerungsleuchten können somit zunächst vom Aufbau her gleich ausgebildet sein und mit anderen Befeuerungsleuchten jeweils zu einem Befeuerungskörper zusammengesetzt werden. Die jeweils nötige Abstrahlcharakteristik kann dann auf einfache Art und Weise durch individuelle Ansteuerung erreicht werden.

Vorzugsweise sind Befeuerungsleuchten eines Befeuerungskörpers nach Art eines Stapels aufeinandergesetzt. Ein Befeuerungskörper kann so auf einfache Art und Weise dadurch hergestellt werden, dass die jeweils vorgesehenen Befeuerungsleuchten, also beispielsweise eine rote für den Nachtbetrieb und eine weiße für den Tagbetrieb, um bei dem obigen Beispiel zu bleiben, aufeinandergesetzt werden. Insbesondere werden diese miteinander verbunden, insbesondere miteinander verschraubt. Dadurch kann ein solcher Befeuerungskörper hergestellt werden, gegebenenfalls mit weiteren ergänzenden Elementen.

Gemäß einer Ausführungsform wird vorgeschlagen, dass als Bussystem des Übertragungssystems ein Bussystem ohne Adressierung verwendet wird.

Ein Bussystem ohne Adressierung weist besonders die folgenden Merkmale auf. Ein Monteur, Servicetechniker oder Instandhalter kann das Betriebsmittel, das über das Bussystem angesteuert werden soll, bzw. das in das Bussystem eingebunden werden soll, ohne weitere Einstellungen am Betriebsmittel zu treffen, gegen ein baugleiches Betriebsmittel tauschen. Es muss dafür am Betriebsmittel keine Einstellung getroffen werden, z.B. braucht kein DIP-Schalter eingestellt zu werden. Interne Adressen werden automatisch von einer übergeordneten Steuerung zugewiesen. Insoweit ist unter einem Bussystem ohne Adressierung zu verstehen, dass die jeweils anzusteuernden bzw. einzubindenden Einheiten, also die genannten Betriebsmittel, keine hardwaremäßig festgelegte Adresse benötigen. Dadurch kann sich sowohl eine Installation als auch eine Wartung und etwaige Reparatur vereinfachen. Es können Kosten eingespart werden, als auch eine Fehleranfälligkeit verringert werden.

Gemäß einer Ausgestaltung wird vorgeschlagen, dass die Flugbefeuerungseinrichtung wenigstens eines, mehrere oder alle Elemente einer nachfolgend erläuterten Elementeliste umfasst. Diese Elementeliste umfasst nämlich eine obere Befeuerungsleuchte zur Anordnung auf der Gondel. Außerdem umfasst sie wenigstens einen Befeuerungskörper, der mehrere Befeuerungsleuchten aufweist und auf der Gondel angeordnet wird. Weiterhin umfasst diese Liste wenigstens eine seitliche Befeuerungsleuchte zur Anordnung am Turm. Somit kann auch eine Beleuchtung dort, bei besonders hohen Türmen, auf einfache Art und Weise realisiert werden.

Vorzugsweise wird eine ergänzende Befeuerungsleuchte und/oder ein ergänzender Befeuerungskörper zur Anordnung auf der Gondel jeweils als ein Element der obigen Elementeliste vorgesehen. Demnach wären dann wenigstens zwei Befeuerungsleuchten bzw. zwei Befeuerungskörper auf der Gondel vorgesehen. Außerdem umfasst die Liste ein Sichtweitenmessgerät. Damit können Sichtweiten erfasst werden und abhängig von diesen Werten kann dann eine Ansteuerung der Flugbefeuerungseinrichtung angepasst werden. Die Leuchten können also bei schlechter Sicht so angesteuert werden, dass sie heller leuchten. Es kommt aber auch in Betracht, dass die Abstrahlcharakteristik davon abhängig geändert wird, ohne dass bei schlechter Sicht zusätzlich eine Infrarotabstrahlung aktiviert wird.

Diese Elemente der Liste können somit alleine oder in Kombination mit wenigstens einem weiteren Element vorgesehen sein. Auch eine Kombination aller dieser Elemente kommt in Betracht.

Vorzugsweise können diese Elemente jeweils adaptiv und unabhängig von weiteren Elementen der Elementeliste an die Zentralsteuereinheit angeschlossen und durch diese angesteuert werden.

Vorzugsweise kann wenigstens eines, mehrerer oder alle Elemente dieser Elementeliste jeweils adaptiv und unabhängig von weiteren Elementen der Elementeliste an die Zentralsteuereinheit angeschlossen werden. Dies ist über das vorgeschlagene Bussystem besonders einfach realisierbar. Durch die Verwendung eines Bussystems ohne Adressierung kann eine solche Adaption besonders einfach vorgenommen werden. Es braucht nur das entsprechende Element ergänzt zu werden und die Zentralsteuereinheit kann die betreffenden Daten über das Bussystem abgeben bzw. verteilen und die entsprechenden Elemente, besonders ein solches, das ergänzt wurde, können sich die Daten aus dem Bussystem nehmen und dadurch gesteuert werden.

Gemäß einer Ausführungsform wird vorgeschlagen, dass mehrere oder alle Elemente der genannten Elementeliste, die die Flugbefeuerungseinrichtung umfasst, jeweils über Leitungen mit gleichem Stecker an jeweils gleiche Steckdosen angeschlossen werden, wobei die Stecker zwischen den Steckdosen ohne Einfluss auf die Funktionalität der dadurch angeschlossenen Elemente getauscht werden können. Die jeweiligen Elemente weisen somit jeweils einige dieser gleichen Steckdosen auf. Eine Installation der Flugbefeuerungseinrichtung kann somit auf einfache Art und Weise durchgeführt werden, weil auf keine korrekte Zuordnung der entsprechenden Leitungen zu den entsprechenden Elementen geachtet zu werden braucht. Die entsprechende Ansteuerung der fertig installierten Flugbefeuerungseinrichtung kann über das Datenbussystem erfolgen. Durch das dort verwendete Protokoll können die jeweiligen Daten dem jeweiligen Element, insbesondere der jeweiligen Befeuerungsleuchte zugeordnet werden. Vorzugsweise besteht die beschriebene Austauschbarkeit der anzuschließenden Leitungen zwischen den einzelnen Befeuerungsleuchten. Es kann aber auch vorgesehen sein, dass ein Befeuerungskörper, der mehrere Befeuerungsleuchten und gegebenenfalls auch noch ein anderes Element oder mehrere andere Elemente aufweist, über nur einen Anschluss angeschlossen wird, über den sämtliche Befeuerungsleuchten und gegebenenfalls weitere Elemente dieses Befeuerungskörpers angesteuert werden können. Auch hier können die unterschiedlichen Daten zu den unterschiedlichen Befeuerungsleuchten bzw. zu den weiteren Elementen über ein Protokoll des Datenbussystems, oder über andere Identifikationsmöglichkeiten des Datenbussystems zugeordnet werden.

Der beschriebene Anschluss über die genannten Leitungen ist besonders für eine Steuerungsverbindung zwischen der Zentralsteuereinheit und den jeweiligen Elementen vorgesehen. Es kommt aber auch in Betracht, dass ein Zwischenelement, wie beispielsweise ein Hub, vorgesehen ist. Jedenfalls kann eine einfache Installation und gleichzeitig das Vermeiden von Fehlern beim Anschließen erreicht werden.

Vorzugsweise weist wenigstens eines der beschriebenen Elemente jeweils eine Verbindung zur Energieübertragung und eine Verbindung zur Datenübertragung in einem Kabel mit gemeinsamem Stecker auf. Es wird somit vorgeschlagen, die Energieübertragung und die Datenübertragung in einem Kabel zu bündeln und auch einen gemeinsamen Stecker dazu vorzusehen. Auch hierdurch kann besonders die Installation vereinfacht werden. Durch die Verwendung eines Datenbussystems können beispielsweise über Sicherheitsabfragen versehentliche Beeinflussungen zwischen Energieübertragung und Datenübertragung verhindert oder zumindest erkannt werden. Durch die Verwendung eines Datenbussystems und damit durch die Verwendung einer digitalen Übertragung besteht nicht die Gefahr der Veränderung eines analogen Signals.

Gemäß einer weiteren Ausgestaltung wird vorgeschlagen, dass elektrische Energie zum Betreiben der Flugbefeuerungseinrichtung und außerdem oder alternativ Steuerdaten unter Verwendung wenigstens eines Verteilermittels von einer zentralen Energieversorgungseinheit und/oder der Zentralsteuereinheit an die jeweiligen Befeuerungsleuchten übertragen wird und gegebenenfalls auch an wenigstens ein Element der oben genannten Elementeliste übertragen wird. In diesem Fall kann die Energie, also der elektrische Strom zur Versorgung der jeweiligen Elemente, zunächst zentral von der zentralen Energieversorgungseinheit bereitgestellt werden, besonders bei Verwendung zweier Befeuerungskörper auf der Gondel, die zueinander beabstandet sind, kann die Energie für beide Befeuerungskörper zunächst zentral bis zu dem Verteilermittel bereitgestellt werden. Das Verteilermittel kann dann, besonders erst in der Nähe der Befeuerungskörper, die Energieverteilung aufteilen. Vorzugsweise wird eine solche Energiezufuhr durch ein Verteilermittel durchgeschleift, so dass ein Teil der Energie an diesem Energieverteilermittel abgenommen und Elementen, besonders Befeuerungsleuchten, zugeführt wird. Die übrige Energie kann zunächst noch gebündelt und beispielsweise zum nächsten Befeuerungskörper weitergeleitet werden, bei dem eine Verteilung über ein weiteres Verteilermittel vorgesehen sein kann. Ein solches Verteilermittel kann vorzugsweise auch Funktionen einer Absicherung erfüllen. Über ein solches Verteilermittel kann somit nicht nur die Energie verteilt werden, sondern auch begrenzt werden.

Außerdem oder alternativ wird vorgeschlagen, dass das Verteilermittel, bzw. einfach der Verteiler, auch zum Datenübertragen verwendet wird. Damit können dann auch Daten auf einfache Weise übertragen und verteilt werden. Gemäß einer Ausführungsform wird eine Kombination mit der Energieverteilung vorgeschlagen, so dass beides kombiniert werden kann. Besonders kann der Verteiler auch die nachfolgenden Merkmale aufweisen:
Der Verteiler kann als ein intelligenter Verteiler ausgebildet werden, welcher Diagnosedaten über den Feldbus zur Verfügung stellt. Zu den Diagnosedaten können Eingangsstrom und/oder Spannung als auch der Ausgangstrom gehören, um nur zwei Beispiele zu nennen. Diese Daten können erfasst und ausgewertet werden, um den Zustand und ggf. einen Fehler der angeschlossenen Elemente, z.B. der Befeuerungsleuchte zu erkennen.

Vorzugsweise werden konfigurierbare Sicherungen vorgeschlagen, von denen je nach vorgesehenem Anschluss besonders ein Auslösestrom und/oder eine Auslösecharakteristik jeweils eingestellt werden kann. Somit können mehrere, auch unterschiedliche Anschlüsse vorgesehen sein, zu denen dann je nach Verwendung die elektronische Sicherung jeweils konfiguriert wird. Als Auslösestrombereich wird ein Bereich von 0-16A vorgeschlagen. Die Auslösecharakteristik kann über eine einstellbare Auslösekennlinie festgelegt werden.

Vorzugsweise ist ein Eingang mit einem Anschluss für EtherCat über Glasfaserleitungen vorhanden, von dem aus die Daten, die über einen solchen Feldbus erhalten werden, umgewandelt werden können, für eine weitere Übertragung zu den Befeuerungsleuchten über Kupfer-Kabel.

Gemäß einer Ausgestaltung wird vorgeschlagen, dass wenigstens eine der Befeuerungsleuchten dazu vorbereitet ist, über Steuerbefehle über das Datenbussystem gesteuert zu werden und im Falle einer Unterbrechung des Datenbussystems autark weiter zu arbeiten. Vorzugsweise wird entsprechend des letzten Befehls weitergearbeitet oder es wird entsprechend eines in der jeweiligen Befeuerungsleuchte gespeicherten Steuerprogramms weitergearbeitet. Somit kann selbst bei einem unwahrscheinlichen Ausfall des Datenbussystems die Flugbefeuerungseinrichtung weiter betrieben werden, zumindest so, dass eine Kollision eines Flugzeugs mit der Windenergieanlage, auf der die Flugbefeuerungseinrichtung installiert ist, vermieden wird. Ein Weiterbetreiben entsprechend des letzten Befehls sollte zumindest verhindern, dass sich die Flugbefeuerungseinrichtung ausschaltet bzw. dass sich die betreffende Befeuerungsleuchte ausschaltet, wenn sie keinen Befehl mehr erhält. Stattdessen wird zumindest sichergestellt, dass die Befeuerungsleuchte weiterbetrieben wird.

Bei der Ausführungsform, die das Weiterbetreiben anhand eines gespeicherten Steuerprogramms vorsieht, kann besonders eine solche Steuerung der Befeuerungsleuchte vorsehen, dass diese an erster Stelle so gesteuert wird, dass eine Kollision eines Flugzeugs damit vermieden wird. Überlegungen, die Flugbefeuerungseinrichtungen so zu steuern, dass diese bspw. weniger die Umwelt stören, können in diesem Ausnahmefall zurücktreten.

Bei Ausfall des Bussystems, was auch einen Ausfall eines Masters beinhalten kann, wird somit als eine Lösung vorgeschlagen, die betreffende Befeuerungsleuchte bzw. die betreffenden Befeuerungsleuchten mit Hilfe eines Steuerprogramms weiter zu betreiben. Ein solches Steuerprogramm kann sich dabei besonders an Uhrzeit und/oder Helligkeit orientieren und entsprechend die betreffende(n) Befeuerungsleuchte(n) meist ohne besondere Einschränkungen eine Weile weiterbetreiben.

Vorzugsweise ist nicht nur die Befeuerungsleuchte oder mehrere Befeuerungsleuchten, sondern wenigstens ein Befeuerungskörper dazu vorbereitet, über Steuerbefehle über das Datenbussystem gesteuert zu werden und im Falle einer Unterbrechung weiterzuarbeiten. Die oben insoweit zu den Befeuerungsleuchten beschriebenen Wirkungen gelten sinngemäß auch bei dieser Ausführungsform für den oder die Befeuerungskörper. Durch den engen Aufbau eines Befeuerungskörpers aus mehreren Befeuerungsleuchten ist dort nicht oder weniger mit einem Übertragungsfehler zu rechnen und somit kommt in Betracht, dass im Falle einer Störung ein mehrere Befeuerungsleuchten aufweisender Befeuerungskörper autark weiter arbeitet.

Vorzugsweise ist wenigstens eine der Befeuerungsleuchten dazu vorbereitet, etwa horizontal rundum in 360° abzustrahlen. Insoweit ist hierrunter eine physikalische Vorbereitung zu verstehen, so dass also Leuchtmittel, besonders Leuchtdioden zum Abstrahlen in 360° vorgesehen sind. Besonders ist entsprechend wenigstens ein mit Leuchtdioden oder anderen Leuchtmitteln bestückter Ring vorgesehen, oder die Leuchtmittel sind ringförmig angeordnet. Dazu wird nun vorgeschlagen, dass die wenigstens eine Befeuerungsleuchte über das Datenbussystem so angesteuert werden kann, dass sie nur in einem Teilbereich dieser 360° abstrahlt, insbesondere nur in einem Sektor von 90°, 180° oder 270°. Vorzugsweise ist eine Befeuerungsleuchte in individuelle Sektoren unterteilt, um ein Abstrahlen in solchen individuellen Sektoren vorzubereiten. Eine solche Unterteilung in individuelle Sektoren, z.B. 10°, 20°, 30°, 45° oder 90°-Sektoren, kann so ausgestaltet sein, dass jeweils alle LEDs eines solchen Sektors so zusammengefasst sind, dass sie gemeinsam angesteuert werden, so dass in dem entsprechenden Sektor abgestrahlt wird. Eine solche Befeuerungsleuchte ist somit dazu vorbereitet, über das Datenbussystem so angesteuert zu werden, dass sie in einem oder mehreren der individuellen Sektoren und/oder in 360°, 270°, 180° oder 90° abstrahlt.

Die Befeuerungsleuchte kann somit bevorzugt in individuellen Sektoren unterteilt sein, standardmäßig aber, je nach Ansteuerung, in 360°, 270°, 180° oder 90° abstrahlen.

Die Abstrahlung kann somit auf einfache Art und Weise eingestellt und an den jeweiligen Bedarf angepasst werden. Eine solche Anpassung an die Situation kann eine momentane Situation sein, wenn beispielsweise die Flugbefeuerungseinrichtung nur bei Bedarf eingeschaltet wird, nämlich wenn sich ein Flugzeug einem bestimmten Sektor nähert.

Diese Situation kann aber auch von einer grundsätzlichen Einbausituation abhängen. Insbesondere kann für zwei beabstandet auf der Gondel angeordnete Befeuerungskörper jeweils ein 270 Grad-Sektor vorgesehen sein. Dadurch kann für diese beiden Befeuerungskörper insgesamt erreicht werden, dass diese zu 180° nach vorn, nämlich in Richtung zu dem Rotor der Windenergieanlage, beide abstrahlen, so dass dieser Bereich von 180° nach vorne doppelt ausgeleuchtet wird. Damit kann der Tatsache Rechnung getragen werden, dass einer der beiden Befeuerungskörper kurzzeitig von einem Rotorblatt des sich drehenden Rotors verdeckt sein kann. Nach hinten, von dem Rotor weg, braucht der Bereich von 180° nur einfach ausgeleuchtet zu werden. Diese 180° können die beiden Befeuerungskörper entsprechend unter sich zu je 90° aufteilen.

Außerdem oder alternativ wird vorgeschlagen, dass wenigstens eine der Befeuerungsleuchten dazu vorbereitet ist, mit mehreren unterschiedlichen Charakteristika abzustrahlen, wobei sie über das Datenbussystem so angesteuert wird, dass sie entsprechend einer dieser Charakteristika abstrahlt. Solche unterschiedlichen Abstrahlcharakteristika betreffen zum einen horizontale Ausleuchtungsprofile, können zum anderen aber auch die Lichtintensität betreffen. Beides kann ortsabhängig sein und häufig auch durch örtliche Vorschriften gegeben sein. Es können nun aber für unterschiedliche Orte mit unterschiedlichen Anforderungen an die Abstrahlcharakteristik dieselben Flugbefeuerungseinrichtungen vorgesehen sein, zumindest können dieselben Befeuerungsleuchten vorgesehen sein. Die Windenergieanlage kann entsprechend mit einer solchen Flugbefeuerungseinrichtung universell ausgestattet werden. Erst durch die Ansteuerung über das Datenbussystem und somit durch eine Berücksichtigung in der Zentralsteuereinheit können dann die entsprechenden Charakteristika ausgewählt werden. Hierdurch ist es auch möglich, Anpassungen vorzunehmen, sollten sich Vorschriften ändern, die beispielsweise eine andere Abstrahlcharakteristik vorschreiben.

Vorzugsweise ist die Flugbefeuerungseinrichtung dazu vorbereitet, für eine, mehrere oder alle der Befeuerungsleuchten eine Restlebensdauer auszulesen. Eine Restlebensdauer berechnet sich besonders nach den bisherigen Betriebsstunden, die das entsprechende Element betrieben wurde. Weiterhin können Extremsituationen hinzukommen, beispielsweise wenn die Flugbefeuerungseinrichtung mit einem hohen Strom betrieben wurde, der die Lebensdauer verkürzt. Es kann aber die Restlebensdauerberechnung auch in der Befeuerungsleuchte und/oder dem Befeuerungskörper vorgenommen werden. Diese Daten, besonders die Betriebszeiten jeder Befeuerungsleuchte, können aufgenommen und über das Bussystem auch auf einfache Art und Weise abgerufen werden. Es ist dann auf einfache Art und Weise möglich, eine solche Restlebensdauer zu kennen und entsprechend rechtzeitig einen Austausch der betreffenden Elemente, besonders der betreffenden Befeuerungsleuchte, vorzusehen. Besonders vorteilhaft lässt sich dieses Auslesen und Auswerten der Restlebensdauer mit einem oben beschriebenen modularen Aufbau eines Befeuerungskörpers kombinieren. Besonders die Ausführungsform, bei der Befeuerungsleuchten eines Befeuerungskörpers individuell austauschbar sind. Besonders bei Befeuerungsleuchten, die nach Art eines Stapels aufeinander zu einem Befeuerungskörper oder einem Teil davon gesetzt werden können, lässt sich bei erkannter Restlebensdauer auf einfache Art und Weise ein Tausch nur der betroffenen Befeuerungsleuchte vornehmen. Besonders andere Elemente eines solchen Befeuerungskörpers, wie eine Infrarotleuchte oder ein Sichtweitenmessgerät können bei geringer Benutzung eine deutlich höhere Restlebensdauer haben, so dass nur ein Teiltausch des Befeuerungskörpers sinnvoll ist.

Gemäß einer Ausführungsform wird eine Flugbefeuerungseinrichtung vorgeschlagen, die dadurch gekennzeichnet ist, dass
- wenigstens eine der Befeuerungsleuchten eine Durchführungsöffnung aufweist, die senkrecht und vollständig durch die Befeuerungsleuchte verläuft und in der wenigstens ein Anschlussstecker zum Anschließen wenigstens eines Kabels des Energieverteilsystems und/oder zum Anschließen wenigstens eines Kabels des Datenbussystems angeordnet ist, und/oder dass
- ein Befeuerungskörper mehrere Befeuerungsleuchten mit jeweils einer Durchführungsöffnung aufweist, wobei die Durchführungsöffnungen der mehreren Befeuerungsleuchten zu einem gemeinsamen Kabelkanal zusammengesetzt sind.

Eine Befeuerungsleuchte kann somit besonders als Kreisring ausgebildet sein mit der Durchführungsöffnung im Inneren. Es kommen aber auch andere Formen in Betracht. Durch solche Durchführungsöffnungen können somit die entsprechenden Anschlusskabel zu dem jeweiligen Anschlussstecker geführt werden. Damit sind diese Anschlusskabel und die betreffenden Anschlussstecker gut vor Witterungseinflüssen geschützt. Außerdem kann hierdurch auch auf einfache Art und Weise sichergestellt werden, dass die Anschlusskabel in jedem Fall hinter den Leuchtmitteln angeordnet sind und damit die Leuchtfunktion nicht behindern.

Werden wenigstens zwei solcher Befeuerungsleuchten zu einem Befeuerungskörper, oder einem Teil davon, aufeinander gesetzt, z.B. ein Tagfeuer auf ein Nachtfeuer oder umgekehrt, können sich diese Durchführungsöffnungen zu einem Kabelkanal zusammensetzen. Es kann für einen solchen Befeuerungskörper auch vorgesehen sein, dass eine weitere Befeuerungsleuchte oder eine der beiden Befeuerungsleuchten ohne Durchführungsöffnung aufgesetzt wird. Eine solche Befeuerungsleuchte ohne Durchführungsöffnung kann dann einen Abschluss des Befeuerungskörpers bilden, so dass sie die Durchführungsöffnung der unter ihr liegenden Befeuerungsleuchte verschließt oder abdeckt. Gleichzeitig kann aber zu dieser weiteren Befeuerungsleuchte von unten durch den Kabelkanal wenigstens ein Anschlusskabel zugeführt werden. Eine solche Befeuerungsleuchte zum Abschluss kann bspw. eine Nachtbefeuerungsleuchte sein.

Erfindungsgemäß wird zudem ein Verfahren zum Steuern einer Flugbefeuerungseinrichtung vorgeschlagen, wobei eine Flugbefeuerungseinrichtung nach einem der vorstehend beschriebenen Ausführungsformen verwendet wird und jede Befeuerungsleuchte individuell über das Datenbussystem angesteuert wird.

Ein solches Verfahren setzt somit vorteilhaft die vorbeschriebenen Flugbefeuerungseinrichtungen ein.

Erfindungsgemäß wird zudem eine Windenergieanlage vorgeschlagen, die mit einer Flugbefeuerungseinrichtung gemäß wenigstens einer der vorstehend erläuterten Ausführungsformen ausgestattet ist. Eine solche Windenergieanlage kann somit auf einfache Art und Weise Anforderungen für die Flugbefeuerung erfüllen. Besonders kann auch durch das modulare Prinzip der vorgeschlagenen Flugbefeuerungseinrichtung eine große Variantenvielfalt der Flugbefeuerungseinrichtungen erreicht werden. Die Windenergieanlagen sind somit auf einfache Art und Weise für unterschiedliche Standorte anpassbar. Häufig werden physikalisch baugleiche Flugbefeuerungseinrichtungen für Windenergieanlagen für unterschiedliche Standorte mit unterschiedlichen Anforderungen an die Flugbefeuerung vorgesehen, die letztlich nur noch durch entsprechende Programmierung an den entsprechenden Standort angepasst werden müssen. Auch hier wird das Konfektionieren einer Windenergieanlage erleichtert. Außerdem wird auch eine Fehleranfälligkeit reduziert, weil das Zusammenstellen falscher Komponenten dadurch vermieden wird, dass es weniger auf die konkreten physikalischen Komponenten ankommt.

Die Erfindung wird nun exemplarisch anhand von Ausführungsbeispielen unter Bezugnahme auf die begleitenden Figuren näher erläutert:
- Figur 1: zeigt eine Windenergieanlage in einer perspektivischen Ansicht.
- Figur 2: zeigt Komponenten einer Flugbefeuerungseinrichtung schematisch.
- Figur 3: zeigt eine Gondel einer Windenergieanlage mit Befeuerungsleuchten darauf.
- Figur 4: zeigt einen Ausschnitt der Figur 3.
- Figur 5: zeigt eine Befeuerungsleuchte für eine Tagbefeuerung in einer perspektivischen Darstellung.
- Figur 6: zeigt eine weitere Ausführungsform einer Befeuerungsleuchte für eine Tagbefeuerung in einer perspektivischen Darstellung.
- Figur 7: zeigt eine Befeuerungsleuchte für eine Nachtbefeuerung in einer perspektivischen Darstellung.
- Figur 8: zeigt einen Zusammenbau der Befeuerungsleuchten gemäß Figuren 6 und 7 in einer perspektivischen Darstellung.
- Figur 9: zeigt eine weitere Ausführungsform einer Befeuerungsleuchte für eine Tagbefeuerung in einer perspektivischen, seitlichen Draufsicht.
- Figur 10: zeigt die Befeuerungsleuchte der Figur 9 in einer perspektivischen Ansicht seitlich von unten.
- Figur 11: zeigt einen Ausschnitt eines Innenraums einer Gondel mit einer Zentralsteuereinheit einer Flugbefeuerungseinrichtung.

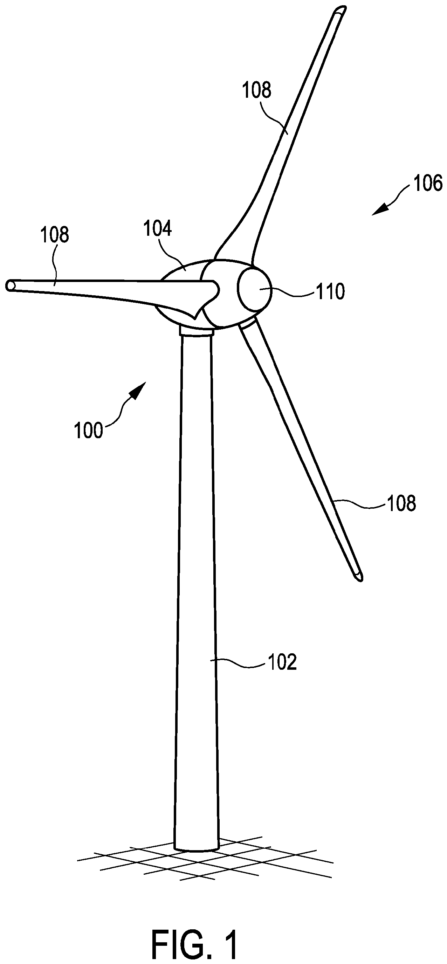

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

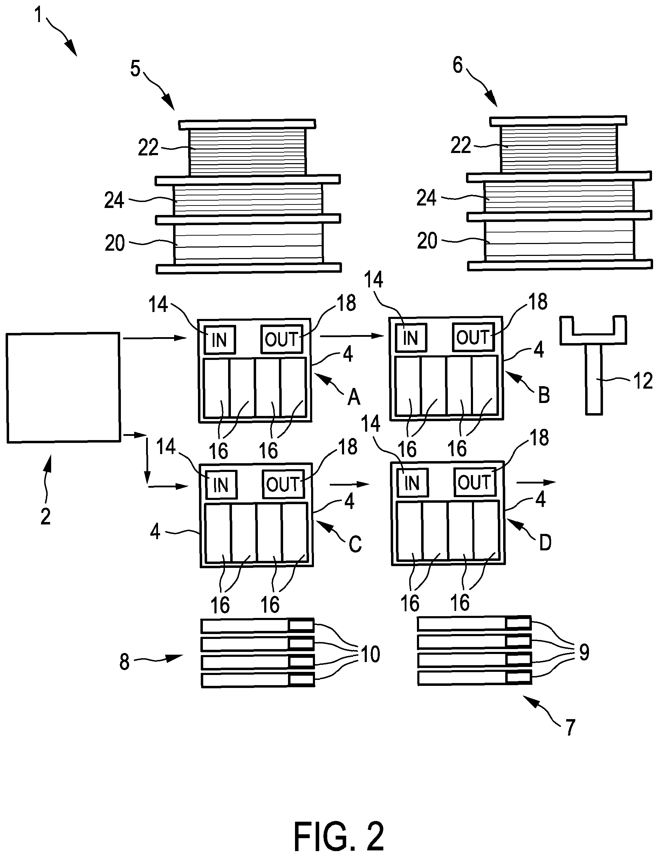

Figur 2 zeigt Elemente einer Flugbefeuerungseinrichtung schematisch, wobei somit eine nicht installierte Flugbefeuerungseinrichtung 1 dargestellt ist, wobei Verbindungsleitungen bzw. Kabel und einige Elemente, wie Befestigungselemente, in dieser schematischen Darstellung nicht dargestellt sind. Eine Zentralsteuereinheit 2 ist schematisch als Block dargestellt. Gleiches gilt für die vier dargestellten Verteilermittel 4, die vereinfacht auch als Verteiler bezeichnet werden können.

Weiterhin umfasst die Flugbefeuerungseinrichtung 1 einen ersten und zweiten Befeuerungskörper 5 bzw. 6, die zur zueinander beabstandeten Anordnung auf der Gondel 104 einer Windenergieanlage 100 vorgesehen sind.

Weiterhin umfasst die in Figur 2 gezeigte Flugbefeuerungseinrichtung 1 einen ersten und einen zweiten Satz seitlicher Befeuerungsleuchten 7 bzw. 8 zur Anordnung an einem Turm wie dem Turm 102 in unterschiedlichen Ebenen, so dass jeweils ein Satz seitlicher Befeuerungsleuchten 7 bzw. 8 in jeweils einer Ebene angeordnet wird. Beispielsweise kann der erste Satz seitlicher Befeuerungsleuchten 7 auf halber Turmhöhe und der zweite Satz seitlicher Befeuerungsleuchten 8 auf dreiviertel Turmhöhe angeordnet sein. Dies sind nur zwei Beispiele zur Veranschaulichung. Jedenfalls ist der erste Satz seitlicher Befeuerungsleuchten 7 für eine untere Ebene und der zweite Satz seitlicher Befeuerungsleuchten 8 für eine obere Ebene des Turms vorgesehen. Trotzdem können diese beiden Sätze seitlicher Befeuerungsleuchten 7 und 8 gleich sein. Beide Sätze umfassen hier jeweils vier seitliche Befeuerungsleuchten 9 bzw. 10, die in dem gezeigten Beispiel baugleich sind.

Außerdem ist ein Sichtweitenmessgerät 12 vorgesehen, um Sichtweiten zu erfassen, die von bzw. in der Zentralsteuereinheit 2 ausgewertet werden können.

Die Flugbefeuerungseinrichtung 1 ist nun so aufgebaut, dass die Zentralsteuereinheit 2 in einem Hauptsteuerschrank untergebracht werden kann. Ein solcher Hauptsteuerschrank kann auch eine speicherprogrammierbare Steuerung (SPS) zur Steuerung der Elemente der Flugbefeuerungseinrichtung 1 vorsehen. Ferner kann eine unterbrechungsfreie Stromversorgung (USV) vorgesehen sein, um im Falle eines Ausfalls des Versorgungsnetzes den Betrieb der Flugbefeuerungseinrichtung aufrecht zu erhalten. Auch eine Energieversorgung ist in bzw. bei der Zentralsteuereinheit 2, insbesondere in dem genannten Hauptsteuerschrank vorgesehen. Somit kann von dieser Zentralsteuereinheit 2 aus zentral die Flugbefeuerungseinrichtung 1 sowohl gesteuert werden, als auch mit der entsprechenden Energie versorgt werden. Generell schafft die Erfindung die Möglichkeit, für die gesamte Flugbefeuerungseinrichtung mit nur einem Steuerschrank auszukommen. Entsprechend wird auch ganz allgemein vorgeschlagen, für die Flugbefeuerungseinrichtung nur einen Steuerschrank zu verwenden.

Eine Energieversorgung kann von der Zentralsteuereinheit 2 aus so erfolgen, dass entsprechender Strom einem Eingang 14, einem Verteilermittel 4 bzw. Verteiler zugeführt wird und über mehrere Versorgungsanschlüsse 16 verteilt werden. Beispielsweise kann dafür ein Strom mit 40 A dem Verteilermittel 4 zugeführt werden, der an den Versorgungsanschlüssen 16 jeweils einen Strom von 16 A bereitstellen kann.

Zusätzlich ist an dem Verteilermittel 4 ein Ausgang 18 vorgesehen, mit dem elektrische Energie an ein weiteres Verteilermittel 4 weitergeführt werden kann.

Die vier Verteilermittel 4 der Figur 2 sind baugleich oder können zumindest baugleich ausgeführt sein, sind dabei aber für unterschiedliche Aufgaben vorgesehen. Um das zu veranschaulichen, sind diese Verteilermittel 4 mit den Buchstaben A bis D zur Erläuterung gekennzeichnet. Das Verteilermittel 4 mit dem Buchstaben A ist beispielsweise dazu vorgesehen, jeweils zwei Tagbefeuerungen und zwei Nachtbefeuerungen, nämlich von dem ersten und zweiten Befeuerungskörper 5 bzw. 6 zu versorgen. Entsprechende Leitungen sind hier der Einfachheit halber nicht dargestellt.

Das Verteilermittel 4 mit dem Buchstaben B kann dazu vorgesehen sein, jeweils eine Sonderbefeuerung der Befeuerungskörper 5 bzw. 6 zu versorgen und das Sichtweitenmessgerät 12 zu versorgen. Ein vierter der Versorgungsanschlüsse 16 dieses Verteilermittels B kann hierbei ungenutzt bleiben.

Das Verteilermittel 4 mit dem Buchstaben C kann dazu vorgesehen sein, den zweiten Satz seitlicher Befeuerungsleuchten 8 zu versorgen. Von diesem Verteilermittel C kann Strom zum Verteilermittel D weitergeführt werden. Dieses Verteilermittel 4 mit dem Buchstaben D wird dann gemäß der gezeigten Ausführungsform für die Versorgung des ersten Satzes seitlicher Leuchtbefeuerung 7 verwendet. Jeweils eine der seitlichen Befeuerungsleuchten 9 bzw. 10 kann über jeweils einen der Versorgungsanschlüsse 16 versorgt werden.

Die beiden Befeuerungskörper 5 und 6 der gezeigten Ausführungsform weisen jeweils eine Tagbefeuerungsleuchte 20 und eine Nachtbefeuerungsleuchte 22 auf. Weiterhin ist eine Sonderbefeuerungsleuchte 24 bei beiden Befeuerungskörpern 5 und 6 vorgesehen, die hier im Wesentlichen als Befeuerungsleuchte vorgesehen ist, die im infraroten Bereich abstrahlen kann. Somit bilden die Tagbefeuerungsleuchten 20, Nachtbefeuerungsleuchten 22 und Sonderbefeuerungsleuchten 24 jeweils eine Ausführungsform einer Befeuerungsleuchte auf. Diese drei Leuchten sind jeweils zu einem Befeuerungskörper 5 bzw. 6 zusammengesetzt.

Beispielsweise kann jede Tagbefeuerungsleuchte 20 eine Stromaufnahme von 15A haben, wohingegen jeweils die Nachtbefeuerungsleuchte 22 als auch jeweils die Sonderbefeuerungsleuchte 24 jeweils eine Stromaufnahme von 2A aufweisen können. Beide Befeuerungskörper 5 und 6 zusammen weisen demnach eine rechnerische Stromaufnahme von 19A auf. Da allerdings die Tagbefeuerungsleuchten 20 und die Nachtbefeuerungsleuchten 22 zu unterschiedlichen Zeiten betrieben werden, ist eine Energieversorgung über zwei Verteilermittel 4 möglich. So kann ein Verteilermittel 4, beispielsweise das mit A gekennzeichnete, am Eingang 14 40A erhalten und im Tagesbetrieb jeweils an zwei der Versorgungsanschlüsse 16 15A ausgeben. Es verbleiben dann 10A, die am Ausgang 18 dieses mit A bezeichneten Verteilermittels 4 an das mit B gekennzeichnete Verteilermittel 4 weitergeleitet werden. Das mit B gekennzeichnete Verteilermittel 4 kann dann mit diesen verbleibenden 10A ohne Weiteres die beiden Sonderbefeuerungsleuchten 24 mit je 2A versorgen und auch das Sichtweitenmessgerät 12, das ebenfalls etwa 2A im Betrieb aufnimmt, kann noch versorgt werden.

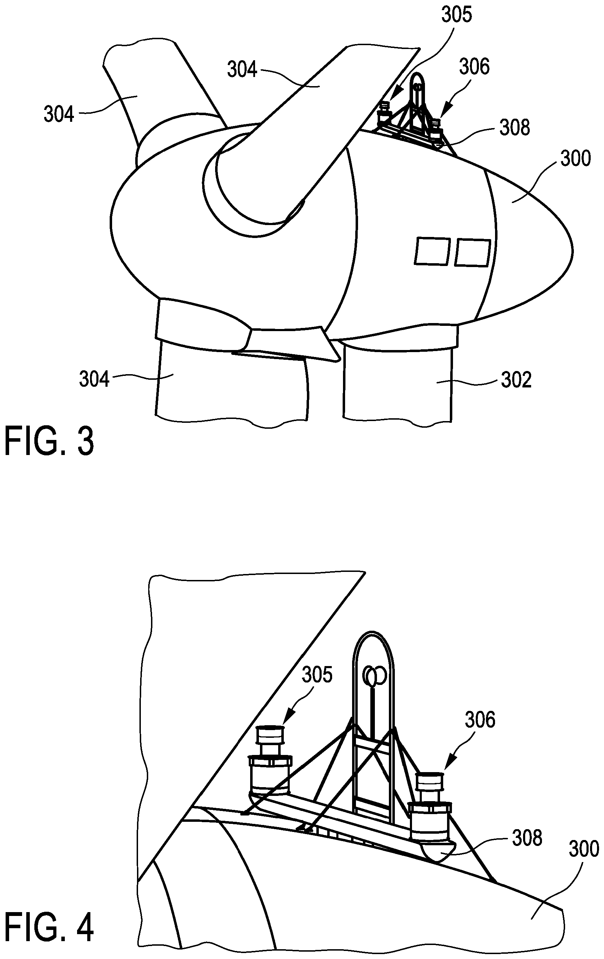

Die Figur 3 zeigt in einer perspektivischen Ansicht eine Gondel 300, die auf einem Turm 302 angeordnet ist, und drei Rotorblätter 304 aufweist. Der Turm 302 und die Rotorblätter 304 sind in der Darstellung der Figur 3 abgeschnitten dargestellt.

Auf der Gondel 300 sind zwei Befeuerungskörper 305 und 306 dargestellt, die auf einem gemeinsamen Träger 308 angeordnet sind, was in dem Ausschnitt der Figur 4 verdeutlicht ist.

Die Befeuerungskörper 305 und 306 können den Befeuerungskörpern 5 und 6 gemäß Figur 2 entsprechen.

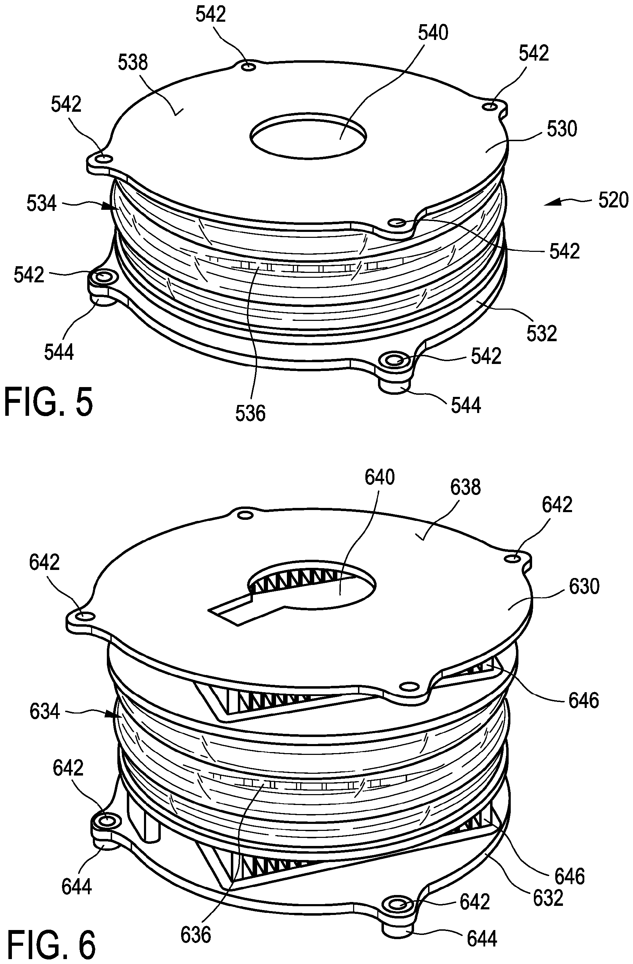

Figur 5 zeigt in einer perspektivischen Ansicht eine Ausführungsform einer Tagbefeuerungsleuchte 520 mit einer oberen Verbindungsplatte 530 und einer unteren Verbindungsplatte 532. Dazwischen befindet sich der Beleuchtungsteil 534, von dem ein umlaufendes Glas 536 zu erkennen ist, hinter dem Leuchtmittel, insbesondere LED's, angeordnet sind.

Über die obere und untere Verbindungsplatte 530 bzw. 532 kann eine Verbindung zu einem weiteren Element, insbesondere einer weiteren Befeuerungsleuchte vorgenommen werden. Über die untere Verbindungsplatte 532 kann auch eine Verbindung zu einem Träger, wie dem Träger 308, vorgenommen werden.

Die obere und untere Verbindungsplatte 530 und 532 sind planparallel zueinander angeordnet, um eine Verbindung nach Art eines Stapels mit einer oder weiteren Befeuerungsleuchten zu ermöglichen und dabei einen geraden Aufbau zu gewährleisten. Über eine plane Oberfläche 538 der oberen Verbindungsplatte 530 kann hierbei eine spielfreie Verbindung zu einer weiteren darauf aufgesetzten Befeuerungsleuchte erreicht werden. Die untere Verbindungsplatte 532 weist ebenfalls eine plane Oberfläche auf, die in der Perspektive der Figur 5 aber nicht zu sehen ist. Ebenso sind plane Oberflächen bei weiteren Befeuerungsleuchten vorgesehen, nämlich solche, die auf der oberen Verbindungsplatte 530 und damit auf der planen Oberfläche 538 angeordnet werden können.

Zur Weiterführung elektrischer Leitungen, sowohl für die Energieversorgung als auch für die Zuführung von Datensignalen ist eine Durchführungsöffnung 540 vorgesehen. Zum festen Befestigen sind zudem diverse Befestigungsbohrungen 542 vorgesehen. Für eine beabstandete Befestigung oder eine Befestigung auf einem Träger sind zudem Befestigungsfüße 544 vorgesehen.

Figur 6 zeigt ebenfalls eine Tagbefeuerungsleuchte 620, die im Wesentlichen der Tagbefeuerungsleuchte 520 der Figur 5 entspricht. Insoweit weist sie auch eine obere und untere Verbindungsplatte 630 bzw. 632 auf und ein dazwischen angeordnetes Beleuchtungsteil 634 mit einem entsprechenden umlaufenden Glas 636. Ebenfalls ist eine plane Oberfläche 638 und eine Durchführungsöffnung 640 vorgesehen, sowie Befestigungsbohrungen 642 und Befestigungsfüße 644.

Alternativ kann auch vorgesehen sein, mehrere Befeuerungsleuchten so aufeinander anzuordnen, dass die Befestigungsfüße 544 bzw. 644 auf eine obere Verbindungsplatte einer anderen Befeuerungsleuchte aufgesetzt werden, so dass ein planparalleler Zwischenraum zwischen zwei planen Oberflächen entsteht. Dadurch kann eine Kühlwirkung erreicht oder verbessert werden, bei der die entsprechenden Verbindungsplatten Wärme leiten und in diesen Zwischenraum abstrahlen können. Gegebenenfalls wäre dann auf eine Abdichtung zu den Durchführungsöffnungen 540 bzw. 640 zu achten. Vorzugsweise werden somit Verbindungsplatten, also obere als auch untere Verbindungsplatten besonders aus Metall vorgesehen, damit diese eine gute thermische Leitfähigkeit aufweisen und zudem eine hohe Stabilität gewährleisten können.

Der wesentliche Unterschied der Tagbefeuerungsleuchte 620 der Figur 6 zu der Tagbefeuerungsleuchte 520 der Figur 5 ist, dass Kühlmittel 646 vorgesehen sind, die als Kühlkörper mit Kühlrippen ausgestaltet sind. Damit kann diese Tagbefeuerungsleuchte 620 insbesondere für einen Betrieb mit stärkerer Beleuchtung und/oder kürzeren Pausenzeiten vorgesehen sein. Gegebenenfalls können durch solche Kühlmittel 646 auch Anwendungen in klimatisch wärmeren Gebieten besser realisiert werden.

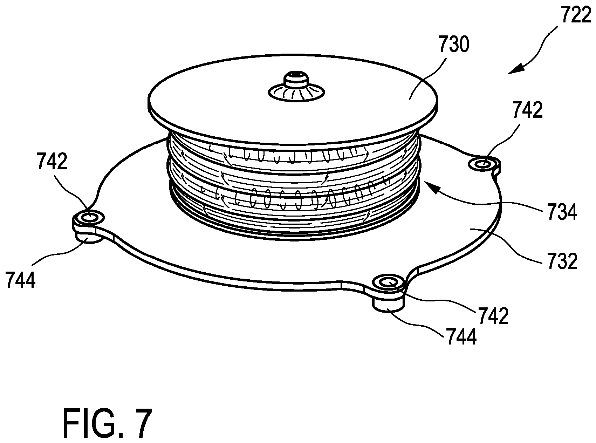

Figur 7 zeigt ein Beispiel einer Nachtbefeuerungsleuchte 722. Sie unterscheidet sich von den beiden Tagbefeuerungsleuchten 520 bzw. 620 insbesondere darin, dass sie rotes Licht abstrahlt, wohingegen die Tagbefeuerungsleuchten weißes Licht abstrahlen. Das rot abgestrahlte Licht ist weniger energieintensiv und damit kann eine deutlich geringere Stromzufuhr benötigt werden, was bereits im Zusammenhang mit der Figur 2 erläutert wurde, aber es kann auch eine kleinere Bauform für den Beleuchtungsteil 734 ausreichen.

Ansonsten kann diese Nachtbefeuerungsleuchte 722 ähnliche Elemente wie die genannten Tagbefeuerungsleuchten aufweisen. Insbesondere ist hier auch eine untere Verbindungsplatte 732 vorgesehen, die Befestigungsbohrungen 742 und Befestigungsfüße 744 aufweist, um damit beispielsweise auf einer oberen Verbindungsplatte 530 oder 630 der Tagbefeuerungsleuchte 520 bzw. 620 angeordnet und befestigt zu werden.

Regelmäßig ist eine solche Nachtbefeuerungsleuchte 722 das oberste Element oder zumindest die oberste Befeuerungsleuchte eines Befeuerungskörpers und benötigt somit nach oben nur eine obere Abdeckplatte 730.

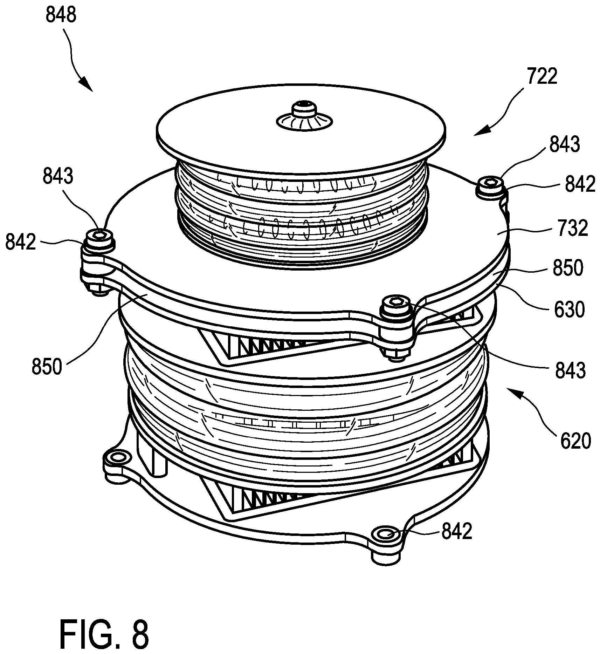

Figur 8 zeigt nun einen Zusammenbau einer Nachtbefeuerungsleuchte 722 auf einer Tagbefeuerungsleuchte 620 gemäß Figur 6. Fig. 8 zeigt somit einen Befeuerungskörper 848. Alternativ könnte aber auch die Nachtbefeuerungsleuchte 722 auf eine Tagbefeuerungsleuchte 520 gemäß Figur 5 angeordnet werden. Die Verbindungsfunktionen, besonders eine Anpassung der unteren Verbindungsplatte 732 an eine obere Verbindungsplatte 630 oder 530 werden so universell ausgestaltet, dass verschiedene Zusammenstellungen verschiedener Befeuerungsleuchten ohne weiteres erreicht werden kann.

In Figur 8 ist dabei zu erkennen, dass zwischen der unteren Verbindungsplatte 732 der Nachtbefeuerungsleuchte 722 und der oberen Verbindungsplatte 630 der Tagbefeuerungsleuchte 620 ein planparalleler Zwischenraum 850 ausgebildet ist.

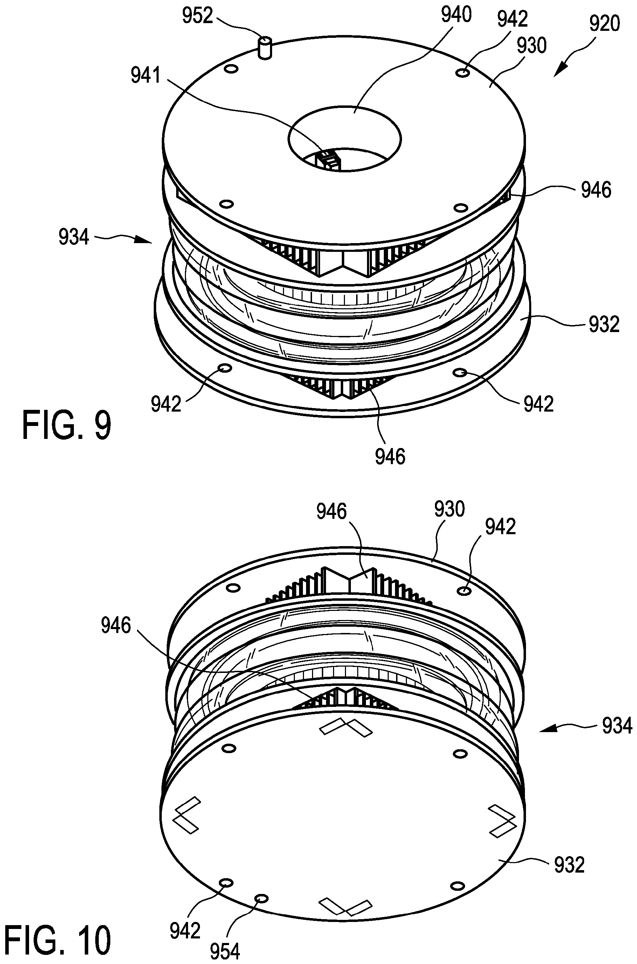

Fig. 9 zeigt eine Tagbefeuerungsleuchte 920, die sich von der Tagbefeuerungsleuchte 620 im Wesentlichen durch die Art der Anordnung der Befestigungsbohrungen 942 in der oberen Verbindungsplatte 930 als auch der unteren Verbindungsplatte 932 unterscheidet. Hierbei wurde insbesondere erkannt, dass durch die Kühlmittel 946 ausreichend Platz auch zum Beleuchtungsteil 934 hin entsteht, dass die Befestigungsbohrungen 942 unmittelbar in den kreisrunden Verbindungsplatten 930 bzw. 932 vorgesehen werden können. Außerdem ist ein Positionierstift 952 vorgesehen, über den besonders beim Aufsetzen einer weiteren Befeuerungsleuchte wie beispielsweise einer Nachbefeuerungsleuchte die Position eines solchen aufgesetzten Elementes festgelegt werden kann. Besonders bei einer über eine Datenbusansteuerung flexibel veränderbaren sektoriellen Abstrahlung ist wichtig, dass die betreffende Ausrichtung der betroffenen Befeuerungsleuchte festgelegt ist.

In Fig. 9 ist auch eine Durchgangsöffnung 940 zu sehen, in der ein Anschlussstecker 941 angedeutet ist zum Thema Kabelführung. Die Tagbefeuerungsleuchte 920 ist somit in der Mitte offen und dort befindet sich auch der Anschluss bzw. Anschlussstecker 941 der Leuchte. Das hat die folgenden Vorteile:
Das Kabel kann in der Leuchte angeschlossen werden. Dadurch sind der Anschlussstecker 941 und das betreffende Kabel zusätzlich vor Wetter geschützt. Leitungswege verdecken nicht die Leuchte. Somit kann die Leuchtstärke ideal ausgenutzt werden.

Fig. 10 zeigt die Tagbefeuerungsleuchte 920 der Fig. 9 in einer perspektivischen Darstellung von unten. Dort ist in der unteren Verbindungsplatte 932 eine Positionierbohrung 954 zu erkennen, die an einen Positionierstift, wie den Positionierstift 952, angepasst ist.

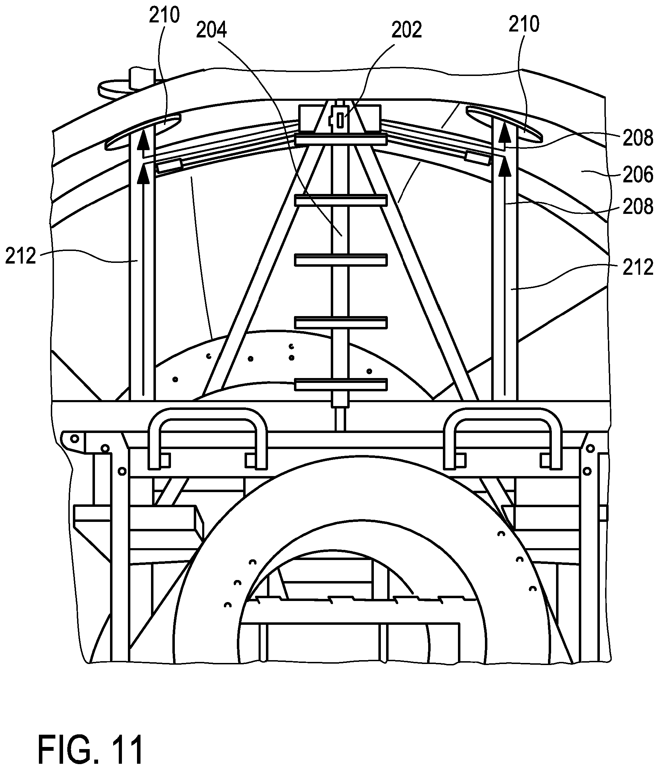

Fig. 11 zeigt einen Ausschnitt eines Innenraums einer Gondel, wie z. B. der Gondel 300 der Fig. 3, in der eine Zentralsteuereinheit 202 angeordnet ist. Diese ist dort im Bereich eines Leiteraufgangs 204 angeordnet. Die Zentralsteuereinheit 202 ist dabei unmittelbar unter einen Gondelverkleidung 206 angeordnet und kann über den Leiteraufgang 204 erreicht werden.

Mögliche Wege für Kabelverbindungen von der Zentralsteuereinheit 202 zu Befeuerungsleuchten, Befeuerungskörpern oder anderen Elementen der Flugbefeuerungseinrichtung sind als mögliche Kabelwege 208 gekennzeichnet. Ein möglicher Kabelweg 208 kann somit von der Zentralsteuereinheit 202 durch eine Gondelöffnung 210 durch die Gondelverkleidung 206 geführt werden. Ein solcher Kabelweg bzw. eine entsprechende Kabelführung kann dabei kombiniert werden mit Tragsäulen 212, die ebenfalls durch die Gondelverkleidung 206 nach außen geführt werden. Hierüber können auf der Gondel angeordnete Flugbefeuerungsleuchten oder Befeuerungskörper mit Daten und Energie versorgt werden. Außerdem kann darüber ein Sichtweitenmessgerät angesteuert und mit Energie versorgt werden und auf dem Weg kann auch Information von einem solchen Sichtweitenmessgerät an die Zentralsteuerung zurückgegeben werden.

Entlang derselben Tragsäule 212 kann auch eine Kabelverbindung nach unten führen. Hierüber kann der Zentralsteuereinheit 202 Energie zugeführt werden. Ebenfalls kann über diesen Weg auch Information und Energie zu seitlichen Befeuerungsleuchten geführt werden, die am Turm anzuordnen sind.

Erfindungsgemäß wird somit insgesamt eine Flugbefeuerungseinrichtung geschaffen, die flexibel einsetzbar und steuerbar ist. Es können auch unterschiedliche und unterschiedlich viele Elemente vorgesehen werden, ohne dass eine Änderung oder wesentliche Änderungen bei den verbleibenden Elementen vorgenommen werden muss. Insbesondere wird vorgeschlagen, die Flugbefeuerungseinrichtung 1 gemäß Fig. 2 je nach Bedarf an die entsprechenden Gegebenheiten anzupassen. Dabei können einzelne Elemente, wie beispielsweise ein Satz seitlicher Befeuerungsleuchten, weggelassen werden. Auch kommt beispielsweise in Betracht, bei den Befeuerungskörpern, die auf der Gondel anzuordnen sind, also die Befeuerungskörper 5 und 6 gemäß Fig. 2, eine Befeuerungsleuchte wie beispielsweise die Sonderbefeuerungsleuchte 24 wegzulassen. Dabei können, um bei diesem Beispiel zu bleiben, die Befeuerungskörper 5 und 6 der Fig. 2 durch Weglassen der Sonderbefeuerungsleuchte 24 einen Aufbau annehmen, der dem des Befeuerungskörpers 848 der Fig. 8 entspricht.

Befeuerungsleuchten können somit an einen Verteiler, wie die Verteiler 4, angeschlossen werden und mit einem Datenbussystem verbunden und angesteuert werden. Als Datenbussystem wird ein EtherCat Feldbus vorgeschlagen. Da für solche Flugbefeuerungseinrichtungen viele unterschiedliche Einsatzgebiete und Auflagen existieren, kann die resultierende Komplexität vorzugsweise durch eine Kombination mehrerer Leuchten bzw. Leuchtentypen erreicht werden. Zur Auswahl zeigt die Fig. 2 eine Darstellung mit dem größtmöglichen Aufbau. Dieser Aufbau umfasst zwei Nachtbefeuerungen, zwei Tagbefeuerungen, zwei Sonderbefeuerungen, acht Turmbefeuerungen und ein Sichtweitenmessgerät. Die Flugbefeuerungseinrichtung mit diesen Elementen kann leicht variiert werden, besonders abhängig vom Einsatzort und Höhe des Turms, um nur einige Beispiele zu nennen. Beispielsweise wäre eine Variation der Flugbefeuerungseinrichtung, dass nur zwei Nachtbefeuerungsleuchten und nur zwei Tagbefeuerungsleuchten vorhanden sind und anzuschließen wären. Die übrigen Verteiler könnten dann entfallen, besonders die Verteiler 4 mit den Buchstaben B bis D. Durch die vorgeschlagene Lösung könnte eine hohe Flexibilität und dabei ein kostengünstiges Produkt sowie die Möglichkeit schnellen Services durch schnelle Reparaturen und Wartungen erreicht werden.

Die Verteiler 4 haben einen 40A-Eingang und vier Versorgungsanschlüsse 16 zu den Verbrauchern, also insbesondere zu Befeuerungsleuchten, mit bis zu 16A-Stromausgang. Ist der Summenstrom der Verbraucher z. B. 20A, so kann am Ausgang 18 ein weiterer Verteiler angesetzt werden. Müssen Verbraucher mit mehr als 16A angeschlossen werden, so kann ein anderer entsprechend angepasster Verteiler verwendet werden. Erfindungsgemäß wird zudem vorgeschlagen, dass Befeuerungsleuchten zum Abstrahlen mehrerer Abstrahlcharakteristiken vorbereitet sind. Eine solche Möglichkeit kann durch Anordnung mehrerer Leuchtdiodenreihen erreicht werden. Besonders können solche Leuchtdiodenreihen ringförmig umlaufend angeordnet sein, um insgesamt in 360° abstrahlen zu können. Durch einen Versatz solcher Leuchtdiodenreihen in vertikaler Richtung kann, insbesondere bezogen auf ein davor angeordnetes Glasprisma, eine unterschiedliche Abstrahlcharakteristik abhängig davon erreicht werden, welche dieser Leuchtdiodenreihen angesteuert werden. Es können auch mehrere solcher Leuchtdiodenreihen zugleich angesteuert werden. Dadurch ist auf einfache Art und Weise eine Abstrahlcharakteristik allein aufgrund entsprechender Ansteuerung auswählbar.

Besonders die Befeuerungskörper, wie die Befeuerungskörper 5 und 6 und der Befeuerungskörper 848, können auf einfache Art und Weise aus ausgewählten Befeuerungsleuchten zusammengesetzt werden. Dies kann auf einfache Art und Weise durch Verschrauben erfolgen, wie beispielsweise in der Fig. 8 bei den Befestigungsbohrungen 842 im Bereich des parallelen Zwischenraums 850 zu erkennen ist. Dort sind zum Verbinden Schrauben 843 verwendet worden.

Eine bevorzugte Möglichkeit zum Anschluss kann über ein Hybridkabel vorgesehen sein, das einen 24V, einen 0V, einen PE-Anschluss und für die Datenübertragung einen RJ45-Anschluss aufweisen kann.

Die Erfindung schafft somit besonders, zumindest gemäß einer oder mehrerer Ausführungsformen, eine Anbindung der Befeuerungsleuchten und anderer Elemente an ein Datenbussystem. Vorzugsweise wird eines ohne Adressierung verwendet. Es kann auch erreicht werden, dass beim Ausfall der Steuerung die betreffende Befeuerungsleuchte weiter leuchten, insbesondere weiter blinken kann. Dabei wird vorzugsweise vorgeschlagen, dass ein Synchrontakt zum Windpark, also zu weiteren Flugbefeuerungseinrichtungen weiterer Windenergieanlagen in demselben Windpark erhalten bleibt.

Vorzugsweise wird ein Controller mit mindestens 25ppm eingesetzt. Bekannte Parameter bisheriger Flugbefeuerungseinrichtungen können beibehalten werden. Der bisher ohne Intensität erfolgte Betrieb kann nun mit Steuerung in gleicher Art und Weise erreicht werden, wenn die Intensität auf 100 % gesetzt wird. Eine Umschaltung zwischen Tag- und Nachtbefeuerung ist auf einfache Art und Weise realisierbar.

Als besonders vorteilhaft wird ein mechanischer Aufbau vorgeschlagen, der adaptierbar ist und Kabeldurchführungen vorsieht. Vorzugsweise werden wettergeschützte Stecker verwendet und verwendete Flugbefeuerungsleuchten werden stapelbar ausgeführt.

Vorzugsweise werden mehrere, besonders für 90°-Bereiche, Lichtkreise vorgesehen. Damit können entsprechende Sektoren zu- oder abgeschaltet werden. Besonders durch die Verwendung des in den Figuren 9 und 10 beschriebenen Positionierstiftes 952 bzw. Positionierungsbohrung 954 können die entsprechenden Lichtkreise fixiert werden, sodass bei entsprechender Ansteuerung auch in den entsprechend gewünschten Sektoren abgestrahlt wird.

Vorzugsweise kann eine Umgebungshelligkeit gemessen werden, wofür ein Helligkeitssensor innen und/oder ein Helligkeitssensor außen angeordnet sein kann, bezogen auf die Gondel oder bezogen auf eine Befeuerungsleuchte.

Eine Kühlung wird vorzugsweise über eine Piezokeramik vorgesehen. Entsprechend kann auch die Kühlung steuerungstechnisch beeinflusst werden.

Als Parameter zum Auslesen, um diese für eine Diagnose verwenden zu können, sind die Folgenden vorgesehen:
- Betriebstemperatur,
- Restlebensdauer,
- Betriebsstrom,
- Betriebsspannung,
- der vorhandene Leuchtentyp,
- eine vorhandene Identifikationsnummer der betreffenden Leuchte zur Identifikation in einem Warenwirtschaftsprogramm, insbesondere eine SAP-Nummer,
- eine Revisionsnummer,
- die bisher gelaufenen Betriebsstunden,
- etwaige Fehlercodes und
- eine Umgebungshelligkeit, sowohl innen als auch außen, bezogen auf die Befeuerungsleuchte.

Für den Betrieb können folgende Parameter vorgesehen sein und abrufbar als auch beeinflussbar sein, nämlich besonders die Folgenden:
- Die Übergabe von Datum und Uhrzeit, was für ein Rekalkulieren einer Einschaltzeit ohne Master, besonders bei Ausfall der Zentralsteuereinheit oder einer Verbindung dazu, genutzt werden kann.
- Reaktionszeit auf eine Intensität oder Intensitätsänderung.
- Eine Struktur, durch die jeder Lichtkreis unabhängig von den Anderen schaltbar ist.
- Vorzugsweise kann jeder Lichtkreis von der Intensität verändert werden.

Besonders bevorzugt sind für unterschiedliche Abstrahlsektoren getrennte Lichtkreise in einer Befeuerungsleuchte vorgesehen, die separat angesteuert werden können. Sie können aber auch in ihrer Intensität verändert werden. Über den entsprechenden Status bzw. auch über die entsprechende Einstellung kann ein Parameter Auskunft geben bzw. es kann die Einstellung über einen solchen Parameter vorgenommen werden.

## Patentansprüche

1. Flugbefeuerungseinrichtung (1) für eine Windenergieanlage (100) mit einer Gondel (104) und einem die Gondel (104) tragenden Turm (102) umfassend:
- mehrere Befeuerungsleuchten (20, 22, 24),
- eine Zentralsteuereinheit (2) zum individuellen Ansteuern der Befeuerungsleuchten (20, 22, 24) und
- ein Übertragungssystem mit
einem Energieverteilsystem (4), zum individuellen Zuführen elektrischer Energie zu den Befeuerungsleuchten (20, 22, 24) um diese zu betreiben, und mit
einem Datenbussystem, zum individuellem Ansteuern der Befeuerungsleuchten (20, 22, 24), wobei das Datenbussystem Steuerdaten zwischen der Zentralsteuereinheit (2) und den Befeuerungsleuchten (20, 22, 24) überträgt,
**dadurch gekennzeichnet, dass** die Flugbefeuerungseinrichtung dazu vorbereitet ist, für eine, mehrere oder alle der Befeuerungsleuchten (20, 22, 24) eine Restlebensdauer auszulesen,
dass jeweils mehrere Befeuerungsleuchten (20, 22, 24) zu einem Befeuerungskörper (5, 6) verbunden sind
dass zwei oder mehr Befeuerungskörper (5, 6) vorgesehen sind und
dass die Befeuerungsleuchten (20, 22, 24) jeweils eines Befeuerungskörpers (5, 6) individuell ansteuerbar sind.

2. Flugbefeuerungseinrichtung (1) nach Anspruch 1,
**dadurch gekennzeichnet, dass** die Zentralsteuereinheit (2) im Inneren der Windenergieanlage (100) angeordnet ist.

3. Flugbefeuerungseinrichtung nach Anspruch 1, **dadurch gekennzeichnet, dass**
- Befeuerungsleuchten (20, 22, 24) jeweils eines Befeuerungskörpers (5, 6) individuell austauschbar sind und außerdem, oder alternativ
- Befeuerungsleuchten (20, 22, 24) eines Befeuerungskörpers (5, 6) nach Art eines Stapels aufeinander gesetzt sind und dabei jeweils benachbarte Befeuerungsleuchten (20, 22, 24) miteinander verbunden sind.

4. Flugbefeuerungseinrichtung (2) nach einem der vorstehenden Ansprüche, **dadurch gekennzeichnet, dass** als Bussystem des Übertragungssystems ein Bussystem ohne Adressierung verwendet wird.

5. Flugbefeuerungseinrichtung (1) nach einem der vorstehenden Ansprüche, und die Flugbefeuerungseinrichtung (1) umfasst wenigstens eines, mehrere oder alle Elemente der Elementeliste bestehend aus:
- wenigstens einer oberen Befeuerungsleuchte (20, 22, 24) zur Anordnung auf der Gondel,
- wenigstens einem mehrere obere Befeuerungsleuchten (20, 22, 24) aufweisenden Befeuerungskörper (5, 6) zur Anordnung auf der Gondel (104),
- wenigstens einer seitlichen Befeuerungsleuchte (9, 10) zur Anordnung am Turm (102),
- wenigstens einer ergänzenden Befeuerungsleuchte (24) zur Anordnung auf der Gondel (104),
- wenigstens einem ergänzenden Befeuerungskörper (5, 6) zur Anordnung auf der Gondel (104) und
- wenigstens einem Sichtweitenmessgerät (12).

6. Flugbefeuerungseinrichtung (1) nach Anspruch 5,
**dadurch gekennzeichnet, dass** eines, mehrere oder alle Elemente der Elementeliste jeweils adaptiv und unabhängig von weiteren Elementen der Elementeliste an die Zentralsteuereinheit (2) angeschlossen werden können.

7. Flugbefeuerungseinrichtung (1) nach Anspruch 5 oder 6,
**dadurch gekennzeichnet, dass** mehrere oder alle Elemente der Elementeliste jeweils über Leitungen mit gleichem Stecker an jeweils gleiche Steckdosen angeschlossen werden, wobei die Stecker zwischen den Steckdosen ohne Einfluss auf die Funktionalität der dadurch angeschlossenen Elemente der Liste getauscht werden können.

8. Flugbefeuerungseinrichtung (1) nach einem der Ansprüche 5 bis 7,
**dadurch gekennzeichnet, dass** eines, mehrere oder alle Elemente der Elementeliste jeweils eine Verbindung zur Energieübertragung und eine Verbindung zur Datenübertragung in einem Kabel mit gemeinsamen Stecker zusammenfassen.

9. Flugbefeuerungseinrichtung (1) nach einem der vorstehenden Ansprüche, **dadurch gekennzeichnet, dass** elektrische Energie zum Betreiben der Flugbefeuerungseinrichtung (1) und/oder Steuerdaten unter Verwendung wenigstens eines Verteilermittels (4) von einerzentralen Energieversorgungseinheit und/oderderZentralsteuereinheit an die jeweiligen Befeuerungsleuchten (20, 22, 24) übertragen wird und ggf. auch an wenigstens ein Element der Elementeliste nach Anspruch 5 übertragen wird.

10. Flugbefeuerungseinrichtung (1) nach einem der vorstehenden Ansprüche, **dadurch gekennzeichnet, dass** wenigstens eine der Befeuerungsleuchten (20, 22, 24) und/oder wenigstens einer der Befeuerungskörper (5, 6) dazu vorbereitet ist,
- über Steuerbefehle über das Datenbussystem gesteuert zu werden und
- im Falle einer Unterbrechung des Datenbussystems autark weiter zu arbeiten.

11. Flugbefeuerungseinrichtung (1) nach einem der vorstehenden Ansprüche, **dadurch gekennzeichnet, dass** wenigstens eine der Befeuerungsleuchten (20, 22, 24) in individuellen Sektoren unterteilt ist und dazu vorbereitet ist,
- etwa horizontal rundum in 360° abzustrahlen und
- über das Datenbussystem so angesteuert zu werden, dass sie in einem oder mehreren der individuellen Sektoren und/oder in 360°, 270°, 180° oder 90° abstrahlt.

12. Flugbefeuerungseinrichtung (1) nach einem der vorstehenden Ansprüche, **dadurch gekennzeichnet, dass** wenigstens eine der Befeuerungsleuchten (20, 22, 24) dazu vorbereitet ist, um
- über das Datenbussystem so angesteuert zu werden, dass sie mit unterschiedlichen horizontalen Ausleuchtungsprofilen, in individuellen Sektoren und/oder unterschiedlicher Lichtintensität abstrahlt.

13. Flugbefeuerungseinrichtung nach einem der vorstehenden Ansprüche, **dadurch gekennzeichnet, dass**
- wenigstens eine der Befeuerungsleuchten eine Durchführungsöffnung (940) aufweist, die senkrecht und vollständig durch die Befeuerungsleuchte verläuft und in der wenigstens ein Anschlussstecker (941) zum Anschließen wenigstens eines Kabels des Energieverteilsystems und/oder zum Anschließen wenigstens eines Kabels des Datenbussystems angeordnet ist, und/oder dass
- ein bzw. einer der Befeuerungskörper mehrere Befeuerungsleuchten mit jeweils einer Durchführungsöffnung aufweist, wobei die Durchführungsöffnungen der mehreren Befeuerungsleuchten zu einem gemeinsamen Kabelkanal zusammengesetzt sind.

14. Verfahren zum Steuern einer Flugbefeuerungseinrichtung (1),
wobei eine Flugbefeuerungseinrichtung (1) nach einem der vorstehenden Ansprüche verwendet wird, wobei das Verfahren die Schritte umfasst
- jede Befeuerungsleuchte (20, 22, 24) individuell über das Datenbussystem ansteuern, und
für eine, mehrere oder alle der Befeuerungsleuchten (20, 22, 24) eine Restlebensdauer auslesen.

15. Windenergieanlage (100) mit einer Flugbefeuerungseinrichtung (1) nach einem der Ansprüche 1 bis 13.

## Claims

1. Aircraft beacon device (1) for a wind power installation (100) having a nacelle (104) and a tower (102) supporting the nacelle (104), comprising:
- a plurality of beacon lights (20, 22, 24),
- a central control unit (2) for individually controlling the beacon lights (20, 22, 24), and
- a transmission system having
an energy distribution system (4) for individually supplying electrical energy to the beacon lights (20, 22, 24) in order to operate the latter, and having
a data bus system for individually controlling the beacon lights (20, 22, 24), the data bus system transmitting control data between the central control unit (2) and the beacon lights (20, 22, 24),
**characterized in that** the aircraft beacon device is prepared to read a remaining service life for one, a plurality of or all of the beacon lights (20, 22, 24),
that a plurality of beacon lights (20, 22, 24) are respectively connected to form a beacon body (5, 6)
that two or more beacon bodies (5, 6) are provided, and
that the beacon lights (20, 22, 24) of a respective beacon body (5, 6) can be individually controlled.

2. Aircraft beacon device (1) according to Claim 1,
**characterized in that** the central control unit (2) is arranged in the interior of the wind power installation (100) .

3. Aircraft beacon device according to Claim 1, **characterized in that**
- beacon lights (20, 22, 24) of a respective beacon body (5, 6) can be individually exchanged and additionally or alternatively
- beacon lights (20, 22, 24) of a beacon body (5, 6) are placed on top of one another in the form of a stack and adjacent beacon lights (20, 22, 24) are respectively connected to one another.

4. Aircraft beacon device (2) according to one of the preceding claims,
**characterized in that** a bus system without addressing is used as the bus system of the transmission system.

5. Aircraft beacon device (1) according to one of the preceding claims, and the aircraft beacon device (1) comprises at least one, a plurality of or all elements in the list of elements consisting of:
- at least one upper beacon light (20, 22, 24) for arrangement on the nacelle,
- at least one beacon body (5, 6) which has a plurality of upper beacon lights (20, 22, 24) and is intended to be arranged on the nacelle (104),
- at least one lateral beacon light (9, 10) for arrangement on the tower (102),
- at least one additional beacon light (24) for arrangement on the nacelle (104),
- at least one additional beacon body (5, 6) for arrangement on the nacelle (104),
and
- at least one visual range measuring device (12).

6. Aircraft beacon device (1) according to Claim 5,
**characterized in that** one, a plurality of or all elements in the list of elements can each be connected to the central control unit (2) adaptively and independently of further elements in the list of elements.

7. Aircraft beacon device (1) according to Claim 5 or 6,
**characterized in that** a plurality of or all elements in the list of elements are each connected to respectively identical sockets via lines having an identical plug, the plugs being able to be exchanged between the sockets without influencing the functionality of the elements in the list which are connected thereby.

8. Aircraft beacon device (1) according to one of Claims 5 to 7,
**characterized in that** one, a plurality of or all elements in the list of elements each combine an energy transmission connection and a data transmission connection in a cable with a common plug.

9. Aircraft beacon device (1) according to one of the preceding claims,
**characterized in that** electrical energy for operating the aircraft beacon device (1) and/or control data is/are transmitted from a central energy supply unit and/or the central control unit to the respective beacon lights (20, 22, 24) using at least one distribution means (4) and is/are possibly also transmitted to at least one element in the list of elements according to Claim 5.

10. Aircraft beacon device (1) according to one of the preceding claims, **characterized in that** at least one of the beacon lights (20, 22, 24) and/or at least one of the beacon bodies (5, 6) is/are prepared
- to be controlled using control commands via the data bus system and
- to continue to operate autonomously in the event of an interruption in the data bus system.

11. Aircraft beacon device (1) according to one of the preceding claims, **characterized in that** at least one of the beacon lights (20, 22, 24) is subdivided into individual sectors and is prepared
- to emit light approximately horizontally all around in 360° and
- to be controlled via the data bus system in such a manner that it emits light in one or more of the individual sectors and/or in 360°, 270°, 180° or 90°.

12. Aircraft beacon device (1) according to one of the preceding claims, **characterized in that** at least one of the beacon lights (20, 22, 24) is prepared to
- be controlled via the data bus system in such a manner that it emits in individual sectors and/or different light intensity with different horizontal illumination profiles.

13. Aircraft beacon device according to one of the preceding claims, **characterized in that**
- at least one of the beacon lights has a passage opening (940) which runs vertically and completely through the beacon light and in which at least one connection plug (941) for connecting at least one cable of the energy distribution system and/or for connecting at least one cable of the data bus system is arranged, and/or **in that**
- a beacon body or one of the beacon bodies has a plurality of beacon lights each with a passage opening, the passage openings of the plurality of beacon lights being combined to form a common cable duct.

14. Method for controlling an aircraft beacon device (1),
wherein an aircraft beacon device (1) is used according to one of the preceding claims, wherein the method comprises the steps
- controlling each beacon light (20, 22, 24) individually via the data bus system and
reading a remaining service life for one, a plurality of or all of the beacon lights (20, 22, 24).

15. Wind power installation (100) having an aircraft beacon device (1) according to one of Claims 1 to 13.

## Revendications

1. Dispositif de balisage aérien (1) pour une éolienne (100) avec une nacelle (104) et une tour (102) portant la nacelle (104) comprenant :
- plusieurs feux de balisage (20, 22, 24),
- une unité de commande centrale (2) pour la commande individuelle des feux de balisage (20, 22, 24) et
- un système de transmission avec
un système de distribution d'énergie (4) pour la fourniture individuelle d'énergie électrique aux feux de balisage (20, 22, 24) afin de les faire fonctionner, et avec
un système de bus de données pour la commande individuelle des feux de balisage (20, 22, 24), dans lequel le système de bus de données transmet des données de commande entre l'unité de commande centrale (2) et les feux de balisage (20, 22, 24),
**caractérisé en ce que** le dispositif de balisage aérien est préparé afin de lire pour un, plusieurs ou tous les feux de balisage (20, 22, 24) une durée de vie restante,
que respectivement plusieurs feux de balisage (20, 22, 24) sont reliés en un corps de balisage (5, 6),
que deux corps de balisage (5, 6) ou plus sont prévus et
que les feux de balisage (20, 22, 24) respectivement d'un corps de balisage (5, 6) peuvent être commandés individuellement.

2. Dispositif de balisage aérien (1) selon la revendication 1,
**caractérisé en ce que** l'unité de commande centrale (2) est agencée à l'intérieur de l'éolienne (100).

3. Dispositif de balisage aérien selon la revendication 1, **caractérisé en ce que**
- des feux de balisage (20, 22, 24) respectivement d'un corps de balisage (5, 6) sont échangeables individuellement et en outre, ou en variante
- des feux de balisage (20, 22, 24) d'un corps de balisage (5, 6) sont placés les uns sur les autres comme un empilement et des feux de balisage (20, 22, 24) respectivement contigus sont reliés les uns aux autres.

4. Dispositif de balisage aérien (2) selon l'une quelconque des revendications précédentes,
**caractérisé en ce qu'**un système de bus est utilisé sans adressage comme système de bus du système de transmission.

5. Dispositif de balisage aérien (1) selon l'une quelconque des revendications précédentes, et le dispositif de balisage aérien (1) comporte au moins un, plusieurs ou tous les éléments de la liste d'éléments se composant de :
- au moins un feu de balisage (20, 22, 24) supérieur pour l'agencement sur la nacelle,
- au moins un corps de balisage (5, 6) présentant plusieurs feux de balisage (20, 22, 24) supérieurs pour l'agencement sur la nacelle (104),
- au moins un feu de balisage (9, 10) latéral pour l'agencement au niveau de la tour (102),
- au moins un feu de balisage (24) complémentaire pour l'agencement sur la nacelle (104),
- au moins un corps de balisage (5, 6) complémentaire pour l'agencement sur la nacelle (104) et
- au moins un appareil de mesure de la distance de visibilité (12).

6. Dispositif de balisage aérien (1) selon la revendication 5,
**caractérisé en ce qu'**un, plusieurs ou tous les éléments de la liste d'éléments peuvent être raccordés respectivement de manière adaptative et indépendamment d'autres éléments de la liste d'éléments à l'unité de commande centrale (2).

7. Dispositif de balisage aérien (1) selon la revendication 5 ou 6,
**caractérisé en ce que** plusieurs ou tous les éléments de la liste d'éléments sont raccordés respectivement par le biais de conduites avec la même fiche aux mêmes prises respectivement, dans lequel les fiches peuvent être remplacées entre les prises sans influencer la fonctionnalité des éléments raccordés ainsi de la liste.

8. Dispositif de balisage aérien (1) selon l'une quelconque des revendications 5 à 7,
**caractérisé en ce qu'**un, plusieurs ou tous les éléments de la liste d'éléments réunissent respectivement une liaison de transmission d'énergie et une liaison de transmission de données dans un câble avec une fiche commune.

9. Dispositif de balisage aérien (1) selon l'une quelconque des revendications précédentes,
**caractérisé en ce que** de l'énergie électrique pour le fonctionnement du dispositif de balisage aérien (1) et/ou des données de commande est/sont transmise(s) en utilisant au moins un moyen de distribution (4) d'une unité d'alimentation en énergie centrale et/ou de l'unité de commande centrale aux feux de balisage (20, 22, 24) respectifs et éventuellement aussi est/sont transmise(s) à au moins un élément de la liste d'éléments selon la revendication 5.

10. Dispositif de balisage aérien (1) selon l'une quelconque des revendications précédentes, **caractérisé en ce qu'**au moins un des feux de balisage (20, 22, 24) et/ou au moins un des corps de balisage (5, 6) est préparé afin de
- être commandé par le biais d'ordres de commande sur le système de bus de données et
- de continuer à travailler de manière autonome dans le cas d'une interruption du système de bus de données.

11. Dispositif de balisage aérien (1) selon l'une quelconque des revendications précédentes, **caractérisé en ce qu'**au moins un des feux de balisage (20, 22, 24) est divisé en secteurs individuels et est préparé afin de
- émettre à peu près horizontalement tout autour à 360° et
- être commandé par le biais du système de bus de données de sorte qu'il émette dans un ou plusieurs des secteurs individuels et/ou à 360°, 270°, 180° ou 90°.

12. Dispositif de balisage aérien (1) selon l'une quelconque des revendications précédentes, **caractérisé en ce qu'**au moins un des feux de balisage (20, 22, 24) est préparé afin de
- être commandé par le biais du système de bus de données de sorte qu'il émette avec différents profils d'éclairage horizontaux, dans des secteurs individuels et/ou une intensité de lumière différente.

13. Dispositif de balisage aérien selon l'une quelconque des revendications précédentes, **caractérisé en ce que**
- au moins un des feux de balisage présente une ouverture de passage (940) qui s'étend perpendiculairement et complètement par le feu de balisage et dans laquelle au moins une fiche de raccordement (941) est agencée pour le raccordement d'au moins un câble du système de distribution d'énergie et/ou pour le raccordement au moins d'un câble du système de bus de données, et/ou que
- un ou l'un des corps de balisage présente plusieurs feux de balisage avec respectivement une ouverture de passage, dans lequel les ouvertures de passage des plusieurs feux de balisage sont réunies en un canal de câble commun.

14. Procédé de commande d'un dispositif de balisage aérien (1),
dans lequel un dispositif de balisage aérien (1) selon l'une quelconque des revendications précédentes est utilisé, dans lequel le procédé comporte les étapes
- commander chaque lampe de balisage (20, 22, 24) individuellement par le biais du système de bus de données, et
lire pour un, plusieurs ou tous les feux de balisage (20, 22, 24) une durée de vie restante.

15. Eolienne (100) avec un dispositif de balisage aérien (1) selon l'une quelconque des revendications 1 à 13.
